Europäisches Patentamt

(19) European Patent Office

Office européen des brevets

(11) Numéro de publication: **0 266 242 B1**

# FASCICULE DE BREVET EUROPEEN

(45) Date de publication de fascicule du brevet:
**17.07.91**

(51) Int. Cl.⁵: **B60R 1/06**, F15B 7/00

(21) Numéro de dépôt: **87402170.2**

(22) Date de dépôt: **29.09.87**

(54) **Dispositif de commande hydraulique à distance d'organes commandés tels que des rétroviseurs extérieurs de véhicules.**

(30) Priorité: **02.10.86 FR 8613776**

(43) Date de publication de la demande:
**04.05.88 Bulletin 88/18**

(45) Mention de la délivrance du brevet:
**17.07.91 Bulletin 91/29**

(84) Etats contractants désignés:
**DE ES GB IT**

(56) Documents cités:
**EP-A- 0 152 219**
**EP-A- 0 167 315**
**CH-A- 590 548**
**FR-A- 2 395 860**
**US-A- 3 013 392**

(73) Titulaire: **BRITAX (GECO) S.A.**
**88 Avenue de Fontainebleau**
**F-77981 Saint Fargeau Ponthierry(FR)**

(72) Inventeur: **Duroux, Bernard**
**19 Domaine de la Brissière**
**F-78890 Garancières(FR)**

(74) Mandataire: **Bérogin, Francis et al**
**CABINET HARLE & PHELIP 21, rue de la**
**Rochefoucauld**
**F-75009 Paris(FR)**

## Description

La présente invention concerne un dispositif de commande hydraulique à distance d'au moins un organe commandé, réglable et/ou verrouillable, monté sur un surpport, tel qu'un rétroviseur, notamment un rétroviseur extérieur pour véhicule automobile, dont on veut régler l'orientation depuis la place du conducteur à l'intérieur du véhicule, le dipositif de commande hydraulique à distance selon l'invention étant également utilisable pour régler la position d'autres organes à positionner par pivotement notamment autour de deux axes perpendiculaires l'un à l'autre.

Parmi les nombreuses réalisations connues de dispositifs agencés à cet effet, l'invention se rapporte plus précisément aux dispositifs de commande hydrauliques à distance du type comprenant :
- un organe de commande à actionnement manuel, ou manipulateur, et
- au moins deux, mais de préférence trois circuits hydrauliques de positionnement, comportant chacun:
- un émetteur de positionnement, qui est un émetteur de pression de fluide, à poche déformable à paroi souple et contenant un fluide hydraulique,
- au moins un récepteur de positionnement,qui est un récepteur de pression de fluide à chambre à volume variable, et
- au moins une canalisation de raccordement de l'émetteur à chaque récepteur correspondant,

lesdits circuits hydrauliques étant tels que la poche à paroi souple de l'émetteur de positionnement d'au moins un circuit hydraulique est mécaniquement déformée par l'actionnement manuel de l'organe de commande, de sorte que du fluide hydraulique qu'elle contient est transféré à l'un au moins des récepteurs qui lui sont reliés, et les récepteurs relient mécaniquement l'organe commandé à son support, afin de modifier la position de l'organe commande par rapport à son support en réponse aux manoeuvres de l'organe de commande.

Un tel dispositif est décrit dans la demande de brevet européen publié sous le N° 0152 219, et dans laquelle ont été présentés les avantages très importants procurés par un tel dispositif par rapport aux réalisations antérieures de l'état de la technique, comportant des transmissions par leviers, tringlerie ou timonerie, des transmissions de mouvements par câbles, ou encore des moteurs électriques, ces avantages étant rapidement évoqués ci-dessous. Les réalisations à leviers bien que généralement de structure assez simple, ne permettent pas de commander le rétroviseur extérieur situé du côté du passager, depuis la place du chauffeur, en raison d'un cheminement qui ne se fait pas en ligne droite; les inconvénients de ces réalisations sont donc liés à la présence de coudes,au poids important des tringlerie et aux frottements, qui rendent généralement ces réalisations peu progressives. Les réalisations comportant trois câbles de transmission du mouvement, sont plus faciles à installer que les réalisations à levier, mais elles ne permettent cependant pas de commander l'orientation du rétroviseur extérieur du côté du passager, car, en raison des frottements, la longueur efficace des câbles de commande est limitée à 50 cm environ, et au-delà de cette distance, les efforts de commande s'accroîssent dans une mesure très importante et rendent le dispositif de commande peu progressif et très difficile à régler. Enfin, les dispositifs à moteurs électriques permettent de commander tous les rétroviseurs extérieurs du véhicule depuis la place du conducteur et indépendamment du cheminement des fils électriques entre ces rétroviseurs et les parties du tableau de bord et/ou des consoles disposées dans la cabine et accessibles au conducteur; cependant, l'inconvénient majeur de telles réalisations sont le coût des moteurs électriques et le volume qu'ils occupent aux niveaux des rétroviseurs.

Dans les différents exemples de réalisation du dispositif de commande hydraulique qui sont décrits dans la demande de brevet européen précitée, l'organe de commande à actionnement manuel est toujours un manche ou une poignée de manipulateur qui est monté pivotant ou articulé sur le couvercle d'un boîtier renfermant les chambres à paroi souple des émetteurs de positionnement. Le manche ou la poignée de manipulateur est toujours relié mécaniquement à au moins un organe rigide, également monté à l'intérieur du boîtier, de sorte que les mouvements de pivotement donnés par l'utilisateur au manche ou à la poignée de manipulateur se transmettent, avec ou sans réduction dans la transmission, à l'un au moins de ces organes rigides internes qui vient ou viennent comprimer au moins une poche déformable à paroi souple des émetteurs de positionnement.

Le dispositif de commande hydraulique à distance faisant l'objet de la demande de brevet européen précitée a en conséquence pour inconvénients que l'ensemble du manipulateur et des émetteurs de positionnement est un ensemble coûteux, d'une part en raison du nombre important des pièces qui le constitue, et d'autre part du fait que ces pièces sont délicates à assembler. De plus, dans tous les exemples de réalisation, le manche ou la poignée de manipulateur se présente comme un levier en saillie vers l'intérieur de la cabine du véhicule par rapport au tableau de bord, ce qui est préjudiciable sur le plan de la sécurité des personnes transportées, et ce qui ne s'adapte pas forcément au style prévu pour le poste de conduite et la planche ou tableau de bord. Par ailleurs, si la mise en place de dispositifs hydrauliques présente les mêmes avantages que celle des fils d'alimentation de moteurs électriques, si l'on considère le cheminement entre le poste de conduite et les rétroviseurs extérieurs à commander, il n'en reste pas moins que les dispositifs hydrauliques ont pour inconvénient spécifique qu'en cas de rupture d'une poche déformable, d'un rétroviseur ou d'une canalisation de liaison, l'ensembles des circuits hydrauliques correspondants doit être démonté et remplacé,et c'est pour cette raison qu'il a déjà été proposé d'équiper le dispositif décrit dans la demande de brevet européen précitée d'un connecteur hydraulique pour chaque circuit hydraulique de commande, ce connecteur hydraulique comportant deux chambres à volume variable, dont l'une est constamment en communication avec la poche déformable de l'émetteur de positionnement correspondant, tandis que l'autre est constamment en communication avec la chambre à volume variable du récepteur de positionnement correspondant, les deux chambres à volume variable du connecteur étant maintenues par des moyens mécaniques en configuration de transfert de pression de l'une à l'autre.

Par la présente invention, on se propose de remédier aux divers inconvénients attachés au dispositif de commande hydraulique décrit dans la demande de brevet européen précitée, et d'apporter également des perfectionnements à différents composants de ce dispositif.

En particulier, l'invention propose un dispositif simple, économique et fiable, quelque soit la distance et le cheminement séparant l'organe de commande à actionnement manuel et les organes commandés, en utilisant des circuits hydrauliques sensiblement sans frottement aux niveaux de l'organe de commande à actionnement manuel ou manipulateur, et des canalisations de liaison.

De plus, l'invention a pour but de proposer un dispositif qui soit indépendant de contingence de forme, afin qu'il puisse être adapté à tous les styles de postes de conduite.

Un autre but encore de l'invention est de proposer un dispositif dans lequel le volume de manipulateur et des émetteurs de positionnement est réduit afin d'en faciliter l'installation dans une planche de bord.

Bien entendu, la télécommande d'un organe commandé tel qu'un rétroviseur extérieur situé, sur un véhicule, du côté du passager, devra être possible, aux mêmes conditions, depuis l e poste de conduite et pour un faible coût et l'ensemble du dispositif sera avantageusement partiellement démontable, du fait de la présence de connecteurs hydrauliques, pour le cas où il serait nécessaire de remplacer un organe tel qu'un émetteur ou récepteur de positionnement.

Le principe à la base du dispositif selon l'invention consiste à utiliser directement des poches déformables de fluide hydraulique, non seulement dans les émetteurs de positionnement, mais de préférence également dans les récepteurs de positionnement, afin qu'un certain volume de fluide hydraulique soit transvasé de l'émetteur au récepteur correspondant d'un circuit hydraulique, en fonction des besoins. Des poches déformables à paroi souple peuvent occuper pratiquement n'importe quelle position dans l'espace,et en particulier trois d'entre elles peuvent être disposées dans des directions circonférencielles, chacune sur un angle au centre d'environ 120°, ou occuper des positions à 120° les unes des autres, pour permettre la commande de l'orientation d'organes réglables tels que des rétroviseurs de véhicules. L'utilisation de poches déformables à paroi souple dans les émetteurs permet de plus, dans une certaine mesure, de s'affranchir des contingences de formes au niveau des chambres à volume variable délimitées par ces poches. Cependant, il reste nécessaire de maintenir ou d'habiller ces poches d'émetteur de positionnement dans des supports pouvant prendre toutes les formes imposées par le style,et pouvant donc simultanément faire fonction d'enjoliveurs, que ces supports soient constitués de pièces fixes ou mobiles, et sans qu'aucun organe mécanique, tel qu'un piston, un vérin, etc. ne vienne s'interposer entre une quelqueconque pièce mobile de maintien d'une poche d'émetteur de positionnement et ladite poche elle-même.

Un autre principe pouvant simultanément être mis en oeuvre consiste, selon la présente invention, et afin d'utiliser pratiquement tout le volume de fluide hydraulique disponible dans chaque circuit hydraulique,à utiliser des cames associées à l'organe de commande à actionnement manuel de manière à chasser, par compression, pratiquement tout le volume de fluide initialement contenu dans la poche déformable de l'émetteur correspondant. De manière analogue, des cames peuvent être prévues pour solliciter les poches déformables des récepteurs de positionnement, de sorte que seul le volume interne des canalisations de raccordement puisse être considéré comme une volume mort. Dans ce cas, un troisième principe pourra avantageusement être mis en oeuvre dans le dispositif conforme à l'invention, à savoir des dipositions particulières de poches déformables se chevauchant par exemple et combinant leurs effets à des formes particulières données aux cames afin d'obtenir des effets particuliers, tels que la transmission en séquence d'un ordre de déverrouillage ou de déblocage, suivi d'au moins un ordre de positionnement, en réponse à une manoeuvre de l'organe de commande à actionnement manuel.

De plus, dans différentes applications possibles du dispositif selon l'invention, des verrouillages ou blocages d'organes commandés peuvent être nécessaires. Dans ces différents cas, la fonction de verrouillage ou de blocage sera avantageusement remplie sans que les poches déformables ne soient mises sous une pression élevée.

Bien que, dans tous les cas, le volume des poches déformables soit lié à la fonction que l'on veut faire remplir à ces poches, il faut noter que le dispositif de commande à distance selon la présente invention est limité, dans ses applications, à la commande de tous les organes commandés qui ne nécessitent que des réglages assurés sur de faibles courses, comme cela est le cas des rétroviseurs ou des projecteurs, ainsi qu'à certains organes nécessitant des verrouillages, comme les projecteurs et toit ouvrant de véhicule , ou encore les portes de véhicule,que l'on veut pouvoir condamner de l'intérieur.

Enfin, un autre principe mis en oeuvre d ans le dispositif selon l'invention consistera, afin de limiter le nombre des organes de commande à actionnement manuel ou, pour un nombre donné de ces derniers, d'augmenter le nombre des organes commandés, à prévoir des commutations de voies pour le fluide hydraulique s'écoulant d'une poche déformable d'un émetteur vers l'une ou l'autre de plusieurs chambres à volume variable de récepteur associés à cet émetteur.

Pour atteindre les buts présentés ci-dessus, l'invention propose un dispositif de commande hydraulique à distance, du type mentionné ci-dessus, et qui se caractérise par le fait que la poche déformable à paroi souple de chaque émetteur de positionnement est directement montée dans l'organe de commande à actionnement manuel.

Dans un premier mode particulier de réalisation, propre à l'invention, l'organe de commande à actionnement manuel est un bouton manipulateur à contact direct, comprenant une enveloppe rigide délimitant d'une part un logement interne pour chacune des poches à paroi souple et,d'autre part, au moins une ouverture directement en regard d'au moins une portion de la paroi souple de chaque poche déformable, afin de permettre la déformation de chaque poche par appui direct de l'utilisateur sur sa paroi souple accessible par ladite ouverture. L'avantage d'une telle réalisation est que la forme extérieure du bouton manipulateur peut être pratiquement quelconque, et en particulier bien adaptée au style de la planche de bord. En particulier, l'enveloppe rigide peut comprendre un carter sensiblement cylindrique, fermé, au moins partiellement, d'un côté par un couvercle, et entourant au moins partiellement un corps interne qui délimite avec le carter et/ou avec le couvercle trois alvéoles, de préférence réparties régulièrement sur la périphérie interne, et dont chacune loge l'un des poches à paroi souple de manière à l'isoler des deux autres poches, les ouvertures d'appui direct sur les poches étant ménagées dans le carter et/ou dans le couvercle. Un autre avantage d'une telle réalisation est que la position des canalisations de raccordement aux poches déformables des émetteurs de positionnement est indifférente. Cependant, dans une variante avantageuse du point de vue de la protection des canalisations de raccordement, le carter est fermé du côté opposé au couvercle par un front qui est percé de trous de passage des canalisations de raccordement aux poches déformables et qui supporte le corps interne présentant trois bras de séparation, en saillie, qui délimite deux à deux les alvéoles de logement des poches déformables ainsi isolées l'une de l'autre par les bras du corps interne.

Dans une autre variante, avantageuse par le fait qu'elle permet de protéger au maximum le bouton manipulateur pendant les instants au cours desquels aucun appui ne doit être exercé sur l'une quelconque des poches déformables des émetteurs de positionnement, le corps interne, le couvercle sans ouverture et le carter dont la surface latérale présentent tous des ouvertures d'appui sur les poches déformables, sont montés mobiles d'une seule pièce vis-à-vis d'un support, entre deux positions extrêmes dont l'une est une position escamotée, dans laquelle le carter est bloqué par un mécanisme de verrouillage sur le support de sorte que seul le couvercle soit en saillie à l'extérieur du support,et dont l'autre position est une position de service, dans laquelle le carter est au moins partiellement en saillie à l'extérieur du support , de sorte que les ouvertures d'appui sur les poches déformables sont librement accessibles à l'utilisateur.

Dans une autre variante encore du bouton manipulateur, avantageuse dans le cas où l'organe commandé est un organe de sécurité, qui ne doit pas pouvoir être commandé par inadvertance ou de manière intempestive, l'enveloppe rigide est en forme de cuvette à fond fermé dans laquelle les poches déformables sont retenues et logées autour d'une tige centrale solidaire de la cuvette et la reliant à une embase de fixation du manipulateur à un support, l'embase étant espacée et en regard d'au moins une ouverture de la cuvette offrant un accès aux poches déformables reliées aux canalisations de raccordement qui passent dans la tige centrale.

Dans une autre variante de réalisation du dispositif selon l'invention, l'organe de commande à actionnement manuel est un manipulateur linéaire comprenant plusieurs boutons poussoirs disposés côte-à-côte et comportant chacun un poussoir monté pivotant autour d'un axe de basculement sur une embase de fixation du bouton-poussoir à un support, au moins une poche déformable étant interposée entre chaque poussoir basculant et l'embase. Dans ce cas également, l'avantage de la réalisation est que la forme du bouton poussoir est indépendante du fonctionnement et peut s'adapter à tous les styles de tableaux de bord. Un autre avantage est que le principe de réalisation d'un tel organe de commande à actionnement manuel peut être étendu à un nombre quelconque de boutons poussoirs comportant chacun une poche déformable. Dans un exemple particulier de réalisation d'un tel manipulateur linéaire, ce dernier comprend au moins trois boutons poussoirs côte-à-côte, dont les poussoirs pivotent. à proximité de l'une de leurs extrémités et d'un même côté du manipulateur, autour d'un axe de basculement commun porté par une embase commune percée d'orifices de passage des canalisations dont chacune est reliée à l'unique poche déformable logée entre chaque poussoir et l'embase commune.

Dans un autre exemple de réalisation, avantageux par le fait que deux poches déformables sont associées à chaque bouton poussoir, le manipulateur linéaire comprend au moins deux boutons-poussoirs côte-à-côte, dont les poussoirs pivotent chacun, dans sa partie médiane, autour d'un axe de basculement commun porté par une embase commune, percée, en regard de chaque poussoir, de deux orifices de passage des canalisations reliées aux deux poches déformables logées entre chaque poussoir et l'embase commune et de part et d'autre de l'axe de basculement. Ce principe de réalisation peut être étendu à un nombre quelconque de boutons poussoirs basculant à deux poches déformables chacun. On peut ainsi obtenir quatre fonctions avec deux boutons poussoirs basculant, dont chacun est associé à deux poches, de sorte que ce dispositif permet, au niveau de son organe de commande, de réduire la place nécessaire tout en comportant une fonction annexe pouvant par exemple être une fonction de déverrouillage ou de déblocage. Il faut noter qu'une telle réalisation s'adapte également bien à pratiquement toutes les formes de tableaux de bord.

Dans un autre exemple encore de dispositif selon l'invention, l'organe de commande à actionnement manuel est un manipulateur oscillant, comprenant un corps tubulaire de fixation du manipulateur a un support, et un poussoir oscillant guidé par rotulage dans le corps tubulaire et engagé dans ce dernier par un partie formant une came de déformation d'au moins trois poches déformables réparties, de préférence de manière régulière, à l'intérieur du corps tubulaire, le poussoir oscillant comportant également une plaque de poussée externe au corps tubulaire, et sur laquelle toute poussée excentrée provoque un déplacement relatif du corps tubulaire et du poussoir comprimant au moins une poche déformable.

Dans une variante avantageuse de cet exemple de réalisation, la partie du poussoir formant came est une tête rotulée sur un fond du corps tubulaire et rattachée à la plaque de poussée par une portion amincie délimitant, avec le corps tubulaire, au moins un évidement de logement des poches qui sont réparties autour de la tête. Dans ce cas, comme au moins une poche est toujours au moins partiellement remplie lorsque le dispositif est monté, le poussoir oscillant est indémontable après que le dispositif a été mis en place.

Comme précédemment, le volume des poches est fonction de l'amplitude des déplacements prévus pour l'organe commandé. Dans cet exemple, la forme de la came interne au poussoir permettra de vider les poches et d'utiliser tout le liquide disponible dans ces dernières. Dans ce type de réalisation, la section du poussoir oscillant n'est pas forcément circulaire, et, en particulier, la tête du poussoir oscillant peut être extérieurement conformée en came à au moins trois lobes de compression des poches déformables. Une telle réalisation permet de privilégier les déplacements suivant certains axes, en particulier lorsque chaque lobe est en regard d'une poche déformable, mais, de plus, on peut avec ce dispositif déplacer un organe commandé suivant deux axes à la fois, lorsque les lobes appuis au moins partiellement sur deux poches déformables simultanément. Avantageusement, afin que la forme extérieure du manipulateur oscillant soit indépendante de ces fonctions et qu'elle puisse s'adapter au style du poste de conduite du véhicule, la partie du poussoir formant came est une jupe dont la face externe est au moins partiellement conformée en calotte sphérique convexe montée en rotule dans une portée en calotte sphérique concave à l'intérieur du corps tubulaire, et la face interne de la jupe délimite avec un plot engagé dans la jupe et solidaire du corps tubulaire, au moins un évidement de logement des poches déformables réparties autour du plot et à l'intérieur de la jupe.

Dans une autre forme de réalisation encore du dispositif selon l'invention, l'organe de commande à actionnement manuel est un manipulateur à poussoir monté flottant sur une embase de fixation du manipulateur a un support, et présentant au moins trois empreintes de logement des poches déformables, en regard desquelles le poussoir présente des cames de compression des poches déformables par appui sur le poussoir. Dans une telle réalisation, avantageuse du fait de sa structure simple, il est possible qu'au moins deux poches déformables se recouvrent partiellement au droit d'une came de poussoir dont la course d'approche vis-à-vis des poches est plus faible, au déplacement du poussoir vers l'embase, que des courses d'approche de cames en regard des parties non recouvertes des deux poches qui se recouvrent. Il est clair que la sollicitation du manipulateur flottant dans la zone de recouvrement de deux poches déformables permet de commander simultanément le positionnement de l'organe commandé selon deux directions différentes, ceci s'ajoutant au fait que la course de commande correspondante est très faible.

Dans une variante de réalisation du manipulateur flottant à poches qui se recouvrent, l'embase présente une empreinte supplémentaire et centrale logeant une poche déformable supplémentaire et centrale, autour de laquelle sont réparties les autres poches déformables avec lesquelles la poche centrale ne présente aucun recouvrement, et le poussoir présente une came centrale, en regard de la poche centrale et à portée sphérique afin de permettre la compression simultanée de la poche centrale et d'au moins une autre poche, la course d'approche de la came centrale vis-à-vis de la poche centrale étant la plus faible des courses d'approche des différentes cames du poussoir, et la course totale de la came centrale étant telle que lorsqu'elle est accomplie et qu'au moins deux poches présentent une zone de recouvrement, une came en regard de la zone de recouvrement affleure les parties recouvertes des deux poches correspondantes. Un tel dispositif permet d'ajouter une fonction de commande de déblocage pour un rétroviseur orienté par action sur les poches autres que la poche centrale. Ce manipulateur flottant également s'adapte à tous les styles de planche de bord car les fonctions remplies sont relativement indépendantes des formes choisies.

Si l'on souhaite pouvoir commander plusieurs organes mobiles et réglables à l'aide de moyens de réglage simples, il est avantageux que, selon une caractéristique propre à l'invention, l'organe de commande à actionnement manuel soit un manipulateur à commutation de voies, permettant de commander sélectivement l'un ou l'autre de deux organes commandés, dont la position de chacun est déterminée par au moins deux, mais de préférence trois, récepteurs de positionnement à pression de fluide et à poche réceptrice déformable, le manipulateur comprenant, d'une part, un corps logeant un nombre correspondant d'émetteurs de positionnement à poche émettrice déformable, dont chacun est relié en parallèle par des canalisations de raccordement à deux récepteurs de positionnement associés chacun à l'un de deux organes commandés, d'autre part, deux émetteurs d'obturation à pression de fluide et également à poche émettrice déformable, et dont chacun est relié par une canalisation de raccordement à un récepteur d'obturation à pression de fluide et à poche réceptrice déformable qui est maintenue par des moyens mécaniques en configuration de transmission de pression avec chacun d'un nombre correspondant de poches déformables d'isolement, dont chacune est située en amont de l'une des poches réceptrices déformables des récepteurs de positionnement associés à l'un des organes commandés, de sorte que la compression d'une poche émettrice d'obturation transfère du fluide vers la poche réceptrice d'obturation qui lui est raccordée et qui est mise sous pression et augmente de volume de façon à comprimer simultanément les poches d'isolement en amont des poches réceptrices de positionnement de l'organe commandé correspondant, afin de couper la communication entre ces poches réceptrices de positionnement et les poches émettrices de positionnement du manipulateur qui restent en communication avec les poches réceptrices de positionnement associées à l'autre organe commandé.

Lorsque le dispositif de commande selon l'invention comporte un tel manipulateur à commutation de voies, il est avantageux que, dans une forme de réalisation de structure simple et facile à actionner, le corps du manipulateur soit solidaire d'une embase montée pivotante sur un support autour d'un axe de pivot, de part et d'autre duquel l'embase présente deux évidements logeant chacun au moins partiellement l'une des deux poches émettrices d'obturation qui sont retenues sur le support, de sorte que tout pivotement du manipulateur sur le support, d'un côté ou de l'autre de l'axe, provoque la compression de l'une des poches émettrices d'obturation, c'est-à-dire la commande de l'obturation de l'une des voies menant à l'un des organes commandés, de sorte que seul l'autre organe puisse être commandé (positionné, réglé ou verrouillé). Afin de raccorder des canalisations de raccordement qui, si elles étaient réalisées chacune d'une seule pièce, seraient trop longues et trop difficiles à installer, il est avantageux d'utiliser, comme déjà proposé dans la demande de brevet européen ci-dessus référencée, au moins un connecteur démontable dans chacun des circuits hydrauliques du dispositif. Dans ce cas, chaque connecteur démontable comporte une poche déformable réceptrice de connexions, reliée par une canalisation de raccordement à la poche déformable d'un émetteur correspondant, et le connecteur comporte également une poche déformable émettrice de connexion, reliée par une canalisation de raccordement à une poche déformable du récepteur correspondant, le connecteur comportant enfin une enveloppe logeant les poches émettrice et réceptrice de connexions en les maintenant en butée l'une contre l'autre afin que la pression s'exerçant sur la poche réceptrice de connexion soit transmise à la poche émettrice de connexion.

Selon l'invention il est alors avantageux que les enveloppes des connecteurs démontables soient constituées par un unique corps de connecteur à deux volets se rabattant et se fixant l'un contre l'autre, de manière amovible, et dont chacun présente un nombre égal d'au moins deux, mais de préférence d'au moins trois empreintes venant chacune en regard d'une empreinte de l'autre volet lorsque les deux volets sont rabattus et fixés l'un contre l'autre, et les poches émettrices des connexions étant disposées chacune dans l'une d'un nombre correspondant d'empreintes d'un volet qui viennent en regard des empreintes de l'autre volet dans chacune desquelles est disposée l'une des poches réceptrices de connexion.

Dans un mode de réalisation de structure avantageusement simple, le corps de connecteur est moulé d'une seule pièce en une matière plastique et ses deux volets à empreintes sont reliés l'un à l'autre par au moins une charnière souple et se fixent de manière amovible l'un contre l'autre par encliquetage élastique.

Lorsque le dispositif de commande selon l'invention comprend à la fois un manipulateur à commutation de voies et des connecteurs démontables logés dans un unique corps de connecteurs, il est avantageux que l'un des deux volets du corps de connecteur présente deux ensembles d'empreintes comprenant chacun:

(1) au moins trois empreintes dans lesquelles se logent trois poches réceptrices de connexion, pour la transmission de toute pression de commande à l'un des deux organes commandés, et

(2) au moins trois empreintes dans lesquelles se logent trois poches déformables d'isolement, en communication chacune respectivement avec l'une des trois poches réceptrices de connexion de l'ensemble correspondant,

les poches réceptrices de connexions des deux ensembles étant raccordées en trois paires indépendantes comportant chacune une poche réceptrice de connexion d'un ensemble en communication avec une poche réceptrice de connexion de l'autre ensemble par l'intermédiaire de leurs poches d'isolement qui sont raccordées l'une à l'autre par une canalisation de couplage, dans laquelle débouche une canalisation de raccordement à l'une des trois poches émettrices de positionnement du manipulateur à commutation de voies, et l'autre volet du corps de connecteurs présente également deux ensembles d'empreintes comprenant chacun :

(1) au moins trois empreintes dans lesquelles se logent trois poches émettrices de connexions, pour la transmission de toute pression de commande à l'un des deux organes commandés, et dont chacune est raccordée par une canalisation de raccordement à l'une respectivement des trois poches réceptrices de positionnement de l'organe commandé correspondant, et

(2) au moins une empreinte dans laquelle se loge au moins une poche déformable réceptrice d'obturation, reliée par une canalisation de transmission à l'une des deux poches émettrices d'obturation du manipulateur à commutation de voies, de sorte que, lorsque les deux volets sont rabattus et fixés l'un contre l'autre, chacune des trois poches réceptrices de connexion correspondant à un organe commandé est en position de transmission de pression avec l'une respectivement des trois poches émettrices de connexions correspondant au même organe commandé, et la ou les poches réceptrices d'obturation associées aux trois poches émettrices de connexion correspondant à ce même organe commandé est ou sont en position de transmission de pression avec les trois poches d'isolement en communication avec les trois poches réceptrices de connexion correspondant au même organe commandé.

On notera que la présence, dans le dispositif de commande, de connecteurs permet de diviser chaque circuit hydraulique en deux parties indépendantes sur le plan du fluide hydraulique. En conséquence, si un circuit hydraulique présente une avarie, du côté de son émetteur ou du côté de son récepteur, seul l'un des deux sous-ensembles est à remplacer, et il n'est pas nécessaire de vidanger le fluide hydraulique de l'ensemble de ce circuit. Avantageusement, dans ce but, afin de faciliter les interventions de réparation et de maintenance au niveau du connecteur, l'un au moins des deux volets du corps de ce dernier est en deux parties amovibles indépendamment l'une de l'autre par rapport à l'autre volet, et chacune des parties présente l'un des deux ensembles d'empreintes du volet correspondant. Dans ce cas, si des deux organes commandés sont respectivement un rétroviseur gauche et un rétroviseur droit, en soulevant l'un des volets, on peut accéder aux poches relatives à l'un des rétroviseurs en protégeant les poches relatives à l'autre rétroviseur de toute action intempestive.

Un autre aspect de l'invention concerne le dispositifs de commande hydraulique à distance tel que présenté ci-dessus et du type dans lequel, de plus, au moins un organe commandé est retenu sur son support par des moyens d'articulation à rotule, autorisant, d'une part, le blocage de l'organe commandé en position par rapport à son support, par frottement l'une contre l'autre d'au moins deux portées en forme de calotte sphérique de courbure complémentaire et de même centre desdits moyens d'articulation, et qui sont appliquées l'une contre d'autre par une pression de blocage, et, d'autre part, le changement de l'orientation de l'organe commandé par rapport à son support sous l'effet de l'augementation de volume de l'une au moins des chambres à volume variables des récepteurs de positionnement, interposés entre ledit organe commandé et son support. Dans ce cas, et selon une caractéristique propre à l'invention, le dispositif de commande se caractérise en ce qu'il comprend au moins un circuit hydraulique supplémentaire comportant un émetteur de déblocage à chambre à volume variable et à portée de l'utilisateur, et relié par une canalisation de raccordement à au moins un récepteur de déblocage à chambre à volume variable qui est monté sur le support de manière à développer une pression antagoniste à la pression de blocage, afin d'écarter l'une de l'autre lesdites portées de frottement, par augmentation du volume de ladite chambre à volume variable du récepteur de déblocage en conséquence d'une diminution du volume de ladite chambre à volume variable de l'émetteur de déblocage. Par analogie avec les autres chambres à volume variable des autres émetteurs et récepteurs du dispositif , les chambres à volume variable des émetteurs et récepteurs de déblocage comprennent chacune au moins une poche déformable à paroi souple, qui est montée directement dans l'organe de commande à actionnement manuel pour l'émetteur de déblocage et retenue dans au moins une empreinte ménagée dans le support correspondant, pour le récepteur de déblocage, et, par ailleurs, la pression de blocage est avantageusement exercée élastiquement sur les portées de frottement.

Différentes formes et dispositions peuvent être données aux poches réceptrices de déblocage, selon le mode de réalisation des portées de frottement et, d'une manière générale, des moyens d'articulation à rotule.

Dans un premier exemple, lorsque les portées de frottement en forme de calotte sphérique comprennent une portée convexe présentée par une platine liée à organe commandé et coopérant avec une portée concave qui l'entoure et est présentée par le support, il est avantageux que la portée convexe soit aménagée sur la surface latérale externe de la platine, dont le fond, du côté opposé à l'organe commandé,présente un bossage hémisphérique en saillie vers le support, de rayon inférieur à celui de la portée convexe et formant une demi-rotule concentrique à la portée convexe et engagée dans une cuvette du support, cette demi-rotule étant maintenue en position de rotation dans la cuvette par la compression exercée sur la portée convexe par une pluralité de doigts solidaires chacun par son pied du support et entourant la portée convexe de manière à définir chacun une portion de la portée concave qui est dans ce cas discontinue. Et chaque doigt délimitant, au niveau de son pied de liaison au support et du côté tourné vers la platine, un évidement s'étendant en direction circonférencielle, et dans lequel est logé l'un au moins des boudins gonflables d'un chapelet de boudins reliés en série par des conduits de faible volume interne et formant la chambre à volume variable du récepteur de déblocage, de sorte que le gonflement des boudins, en réponse à un ordre de déblocage provenant de l'émetteur correspondant, provoque un écartement radial des doigts à l'encontre de leur rappel élastique naturel pour libérer la portée convexe et autoriser une rotation de la platine par sa demi-rotule sur le support, grâce à l'action des récepteurs de positionnement.

Dans un second exemple, si lesdites portées de frottement en forme de calotte sphérique des moyens d'articulation à rotule comprennent une portée convexe présentée par une platine liée à l'organe commandé et coopérant avec une portée concave entourant la portée convexe et supportée par une embase solidaire du support, le dispositif selon l'invention se caractérise alors par le fait que la portée concave est formée sur une jupe périphérique subdivisée en volets contigus par des fentes radiales ménagées dans la jupe qui entoure une gorge annulaire ménagée dans l'embase et contenant la chambre à volume variable du récepteur de déblocage qui est constituée d'une poche déformable à paroi souple et de forme sensiblement torique, de sorte que le gonflement de ladite poche sensiblement torique, en réponse à un ordre de déblocage provenant de l'émetteur de déblocage, commande l'écartement radial des volets de la jupe par rapport à la portée convexe et à l'encontre de leur retour élastique naturel, propre au matériau constitutif, afin de libérer au moins partiellement la portée convexe de son blocage en position par la portée concave de la jupe et de permettre son déplacement relatif par l'action des récepteurs de positionnement.

Dans un dernier exemple particulier, dans lequel les moyens d'articulation à rotule comprennent une demi-rotule qui est, d'une part, engagée dans un logement hémisphérique d'une platine liée à l'organe commandé, et, d'autre part, solidaire d'un organe de liaison à l'organe commandé, cet organe de liaison étant tel qu'il traverse le fond du logement et est sollicité par un organe élastique prenant appui, d'un côté, sur le support et, de l'autre côté, sur l'organe de liaison afin d'exercer la pression de blocage, le dispositif selon l'invention se caractérise par le fait que la chambre à volume variable du récepteur de déblocage est disposée dans une empreinte ménagée dans le support de manière à exercer sur l'organe de liaison une action antagoniste à celle du moyen élastique, lorsque la poche déformable du récepteur de déblocage est gonflée par une diminution du volume de la chambre à volume variable de l'émetteur de déblocage, qui est elle-même délimitée par une poche déformable à paroi souple.

D'autres avantages et caractéristiques de l'invention ressortiront de la description donnée ci-dessous, à titre non limitatif, d'exemples de réalisations des divers aspects de l'invention décrits en référence aux dessins annexés sur lesquels :

Les figures 1a et 1b sont des vues respectivement en élévation de face et en élévation latérale partielle avec coupe partielle d'un premier exemple de bouton manipulateur fixe à contact direct,

les figures 2a et 2b sont des vues respectivement en coupe transversale en élévation latérale d'un second exemple de bouton manipulateur fixe à contact direct,

les figures 3a et 3b sont des vues correspondant respectivement aux figures 2a et 2b mais d'un troisième exemple de bouton manipulateur fixe à contact direct,

les figures 4a et 4b sont également des vues analogues respectivement aux figures 2a et 2b, mais d'un quatrième exemple de bouton-manipulateur fixe à contact direct,

les figures 5a et 5b sont des vues correspondant sensiblement aux figures 2a et 2b mais pour un exemple de bouton manipulateur escamotable à contact direct,

la figure 5c est une vue partielle en coupe axiale d'un élément du bouton manipulateur des figures 5a et 5b,

les figures 6a et 6b sont des vues respectivement de face et en coupe transversale d'un premier exemple de manipulateur linéaire,

les figures 7a et 7b sont des vues analogues aux figures 6a et 6b pour un second exemple de manipulateur linéaire,

la figure 8a est une vue en coupe axiale partielle d' un exemple de bouton manipulateur oscillant,

la figure 8b est une coupe selon le plan A-A d'un organe du bouton manipulateur de la figure 8a,

la figure 9 est une vue analogue à la figure 8a pour un second exemple de bouton manipulateur oscillant,

les figures 10a et 10b sont des vues en plan respectivement d'un premier et d'un second élément d'un manipulateur dit de type flottant,

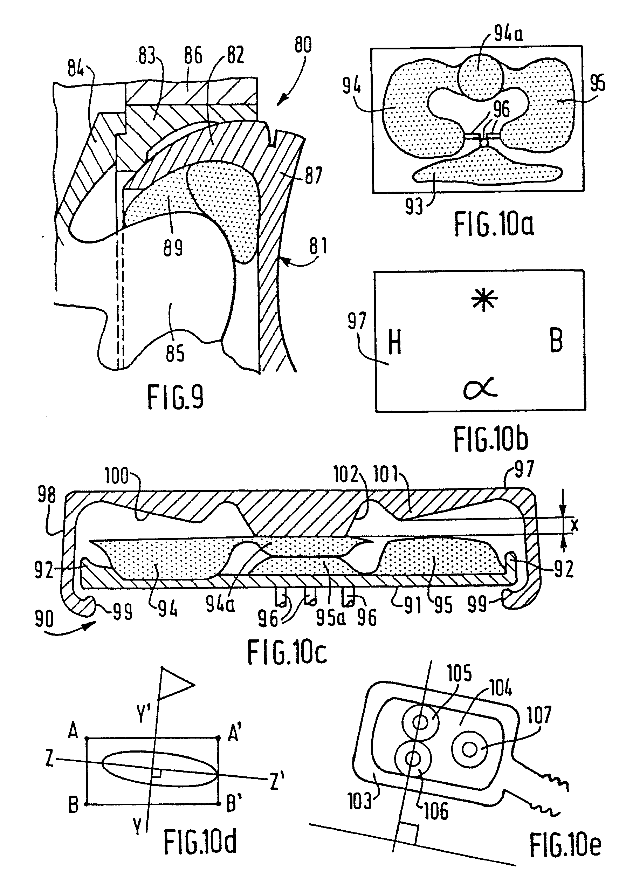

la figure 10 c est une vue en coupe transversale du manipulateur flottant constitué par l'assemblage des éléments des figures 10a et 10b,

les figures 10d et 10e représentent respectivement et schématiquement une vue du champ visible dans un rétroviseur extérieur de véhicule, avec des axes et zones privilégiés de réglage, ainsi qu'un vue d'une tel rétroviseur orientable commandé par l'action de trois récepteurs de positionnement,

La figure 11a est une vue analogue à la figure 10a et une vue en élévation latérale d'un poussoir à came de commande d'un second exemple de manipulateur de type flottant,

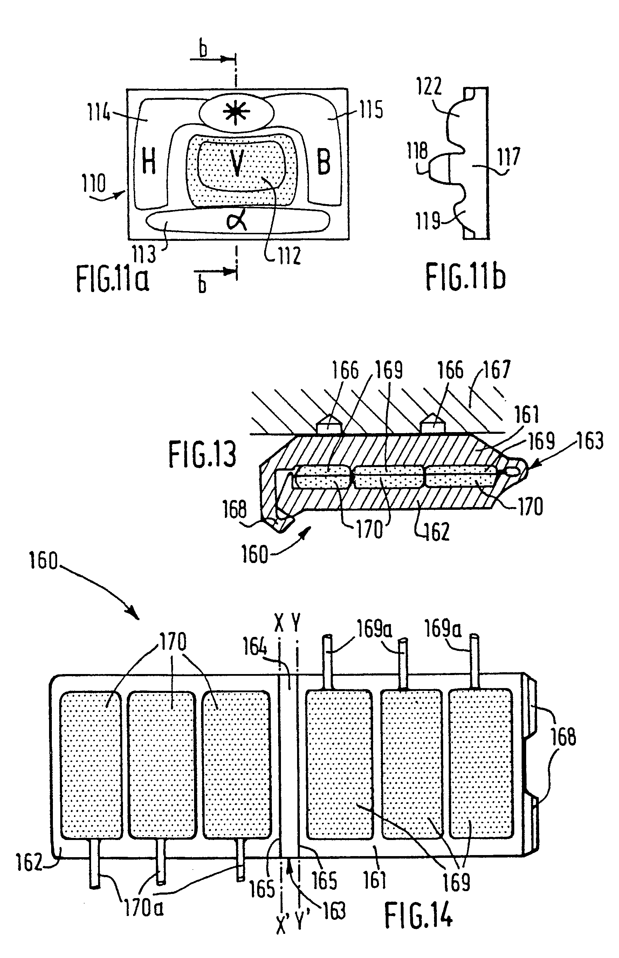

La figure 11b est une vue en coupe transversale selon b-b,

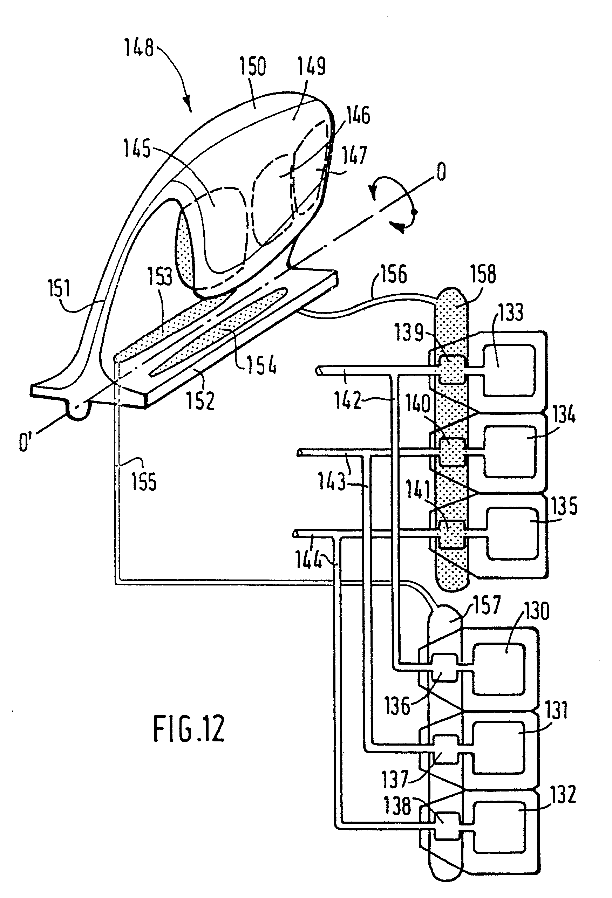

la figure 12 est une vue schématique en partie en perspective et en partie sous forme de circuit , d'un manipulateur pivotant à contact direct et à commutation de voies,

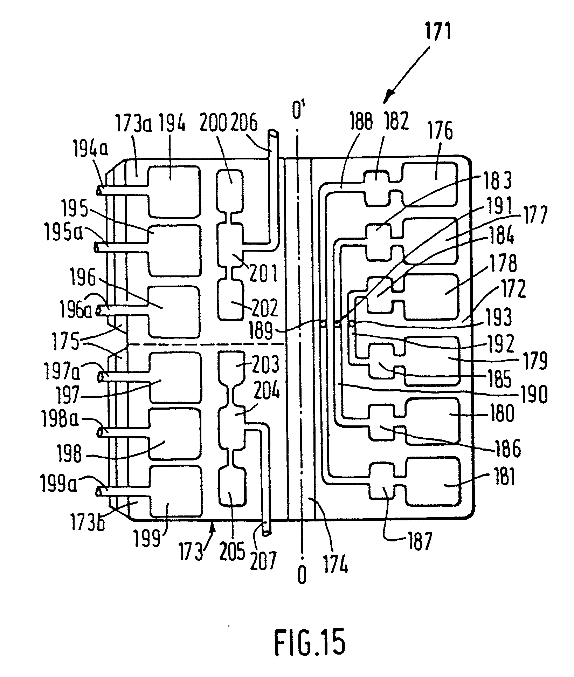

la figure 13 est une vue en coupe transversale d'un connecteur de circuit hydraulique, destiné à connecter un manipulateur à des récepteurs de positionnement d'un organe commandé,

la figure 14 est une vue en élévation de face du connecteur de la figure 13 en position ouverte,

la figure 15 est une vue schématique, en position ouverte, d'un connecteur pour dispositif comportant un manipulateur à commutation des voies,

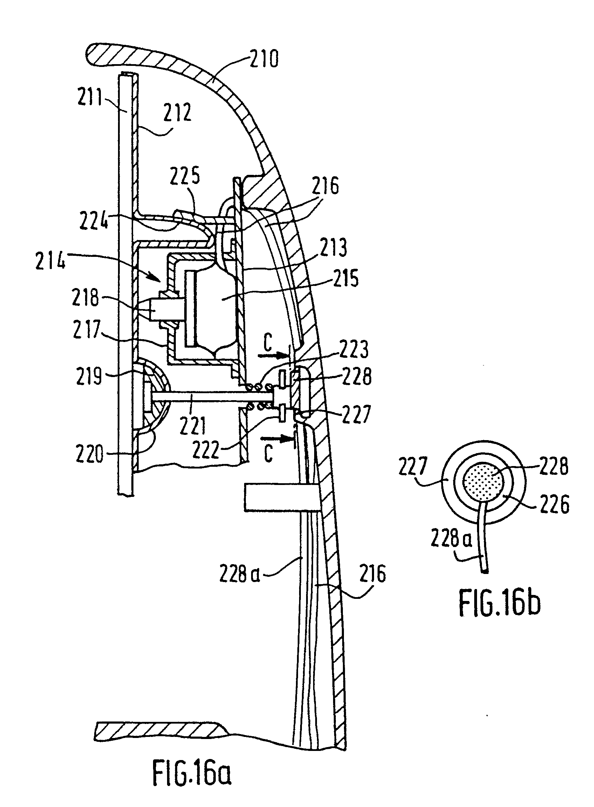

la figure 16a est une représentation partielle, en coupe transversale, d'un exemple de boîtier de rétroviseur réglable, commandé par un dispositif selon l'invention, avec ses moyens d'articulation et de blocage et déblocage de ce rétroviseur dans le boîtier,

la figure 16b est une vue partielle et schématique en coupe selon c-c de la figure 16a,

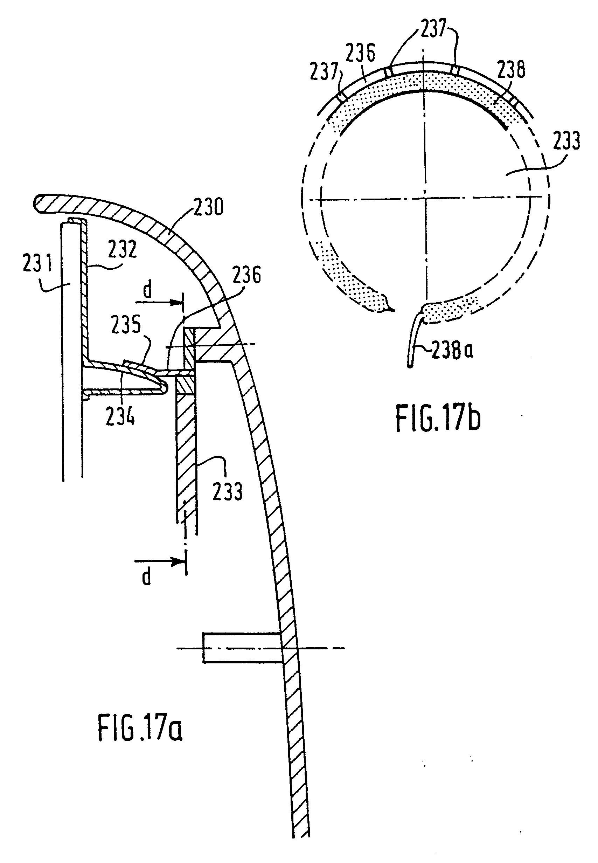

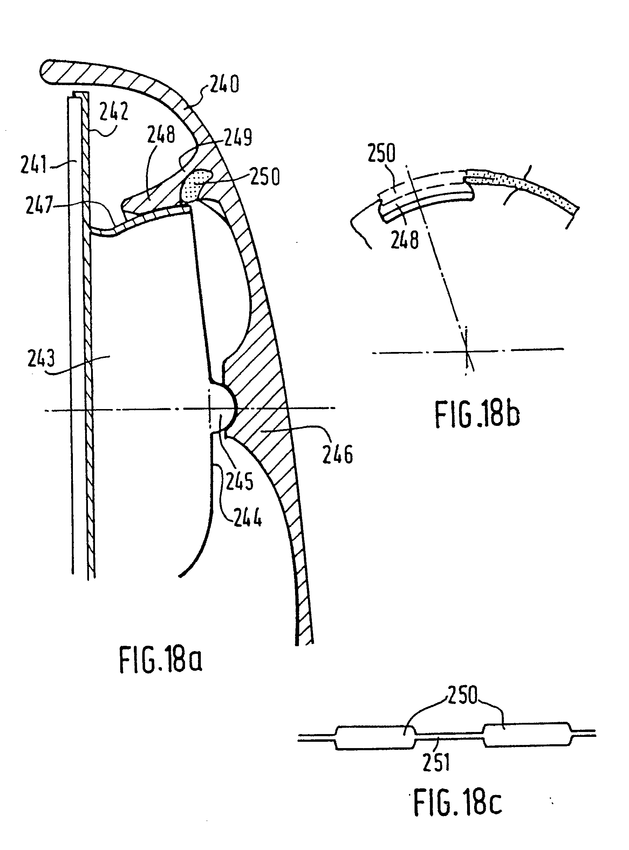

les figures 17a et 18a sont des représentations analogues à celles de la figure 16a de deux autres exemples de boîtiers de rétroviseurs et de moyens d'articulation, de blocage et de déblocage de ce rétroviseur dans son boîtier,

la figure 17b est une vue partielle et schématique en coupe selon d-d de la figure 17a,

la figure 18b est une vue partielle et schématique du mécanisme de la figure 18a, et

la figure 18c est une vue schématique d'un organe du mécanisme de la figure 18a.

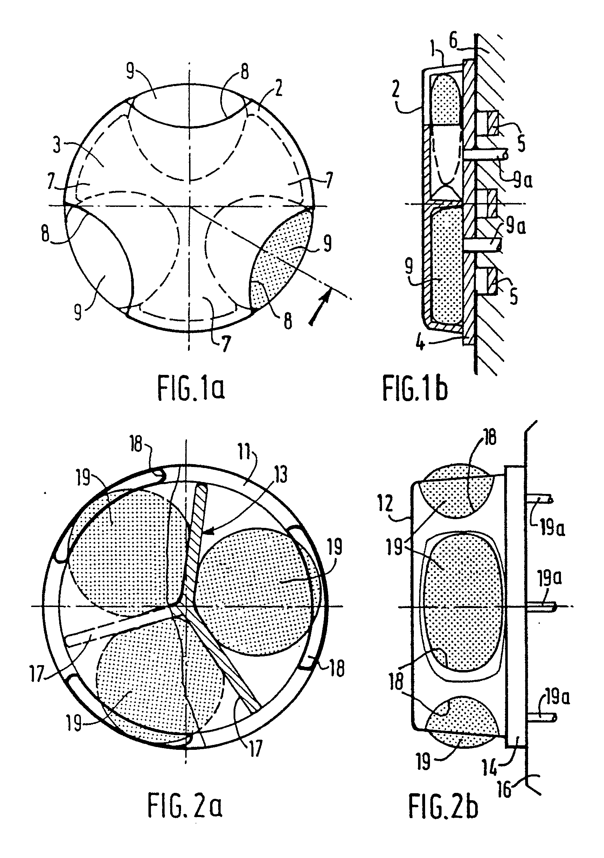

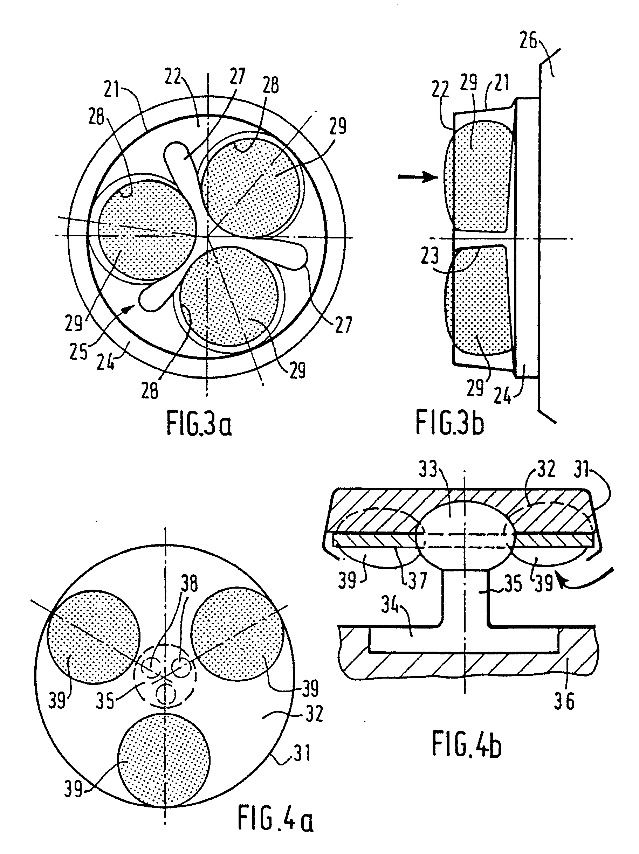

Sur les figures 1a et 1b, on a représenté un organe de commande à actionnement manuel, ou manipulateur, du type bouton-manipulateur fixe, pour un dispositif de commande hydraulique à distance d'un organe commandé, qui est, dans la suite de la présente description, un rétroviseur extérieur orientable de véhicule automobile. Le dispositif de commande hydraulique à distance du positionnement du rétroviseur comprend trois circuits hydrauliques de positionnement dont chacun comporte un émetteur de positionnement, constitué d'une poche émettrice déformable à paroi souple, en une matière synthétique caoutchouteuse, et qui est en communication par un tube souple de petit diamètre et relativement peu déformable élastiquement, avec une poche analogue, déformable et à paroi souple, constituant un récepteur de positionnement. L'ensemble des deux poches émettrice et réceptrice et du tube de liaison est remplie d'un certain volume de fluide hydraulique, de sorte que si l'on comprime la poche de l'émetteur, on diminue son volume et du fluide hydraulique qu'elle contient est transféré sous pression par le tube de liaison dans la poche du récepteur, qui augmente de volume. Les poches réceptrices de positionnement étant retenues entre le rétroviseur orientable et un support, qu'elles relient mécaniquement, et auquel support le rétroviseur est rattaché par des moyens d'articulation à rotule, comme cela est décrit en référence à la figure 4 de la demande de brevet européen 0152219 à laquelle on se reportera avantageusement pour plus de précisions sur la structure du montage du rétroviseur orientable dans son boîtier-support, il en résulte qu'une augmentation de volume de l'une des poches réceptrices de positionnement provoque un pivotement du rétroviseur par rapport à son boîtier-support, oe qui entraîne la compression d'au moins une autre des poches réceptrices de positionnement qui sont réparties autour du centre de pivotement du rétroviseur sur son support, de sorte que du fluide hydraulique est transféré sous pression de cette ou ces poches réceptrices de positionnement comprimées vers la ou les poches émettrices de positionnement qui lui est ou lui sont reliées par un tube de communication.

Le bouton-manipulateur des figures 1a et 1b comprend un carter de forme générale extérieure sensiblement cylindrique, constitué d'une paroi latérale tubulaire 1 fermée à une extrémité par un couvercle 2, et entourant un corps interne tri-lobé 3 en saillie sur une face d'un fond 4 en forme de disque plat, dont l'autre face porte, en saillie, des pattes 5 d'encliquetage élastique dans des trous ménagés à cet effet dans un support 6, tel que la planche de bord ou le tableau de bord. Par l'extrémité de sa paroi latérale 1 du côté opposé au couvercle 2, le carter est fixé par collage, soudage aux ultra-sons ou de toute autre manière convenable, éventuellement amovible, à la périphérie de la face en regard du fond 4. Le carter, dont la paroi latérale 1 et le couvercle 2 sont d'une seule pièce, par exemple en une matière plastique relativement rigide, est ainsi solidarisé à un autre organe rigide, également en matière plastique,constitué du fond 3 et du corps interne 4, venus d'une seule pièce. L'ensemble est rapporté en position fixe par encliquetage sur le support 6. Chacun des trois bras radiaux 7 du corps interne 3 délimite, avec les deux autres, des alvéoles concaves formant, avec les parties en regard du couvercle 2 et de la paroi latérale 1, trois logements s'ouvrant chacun vers l'extérieur du bouton par une ouverture 8, ménagée pour partie dans la paroi latérale 1 et pour partie dans le couvercle 2. Dans chacun des trois logements régulièrement répartis à 120° les uns des autres autour du centre du bouton manipulateur est logée une poche émettrice de positionnement 9 qui est une poche déformable ainsi isolée des autres poches par les bras 7, et, dont le tube 9 $_a$ de liaison au récepteur de positionnement correspondant traverse des trous en regard ménagés dans le fond 4 et dans le support 6. Chaque poche déformable ainsi protégée dans une enveloppe rigide est accessible de l'extérieur, au travers de l'ouverture 8 correspondante, et il suffit à l'utilisateur d'appuyer directement sur la partie accessible de la paroi souple de la poche 9 pour la comprimer dans son logement et transmettre un ordre hydraulique de commande de positionnement au récepteur correspondant. L'appui simultané sur deux poches 9 est possible et aisé, de face et/ou latéralement, du fait de la forme et de l'étendue des ouvertures 8 ainsi que de la répartition régulière des poches 9, ouvertures 8 et des bras 7 à 120° les uns des autres et en direction circonférencielle autour du centre du bouton. Ce manipulateur présente les avantages supplémentaires qu'il est constitué par l'assemblage de deux pièces rigides seulement, dont chacune présente des formes simples et est facile à fabriquer. D'autre part, l'épaisseur du bouton manipulateur, c'est-à-dire sa dimension perpendiculairement au support 6, est faible et ses formes extérieures peuvent être adaptées au style du tableau de bord, car le carter peut présenter une section polygonale par exemple.

Le manipulateur représenté sur les figures 2a et 2b est également un bouton manipulateur fixe à contact direct sur les poches déformables, et qui présente de nombreuses caractéristiques de structure identique ou analogue à celles de celui décrit ci-dessus. Les différences essentielles sont que les trois ouvertures 18 d'accès aux trois poches déformables 19 sont des ouvertures ovales ménagées uniquement par la paroi latérale 11, entre le couvercle 12 et le fond 14, et que le corps interne 13 est simplement constitué de trois bras radiaux 17 chacun en forme de voile mince mais cependant rigides, s'étendant du centre jusqu'à la face interne de la paroi latérale 11. Les moyens de retenue du bouton manipulateur sur le support 16 n'ont pas été représentés, mais, comme dans l'exemple précédent, les tubes 19a des poches 19 traversent des trous en regard ménagés dans le fond 14 et dans le support 16.

Au contraire, sur le bouton-manipulateur fixe et à contact direct des figures 3a et 3b, dont la structure générale et les composants essentiels sont les mêmes que dans les deux exemples précédemment décrits, les ouvertures 28 d'accès aux poches émettrices déformables 29 sont des ouvertures circulaires ménagées uniquement dans le couvercle 22 que la paroi latérale 21 raccordent sans ouverture au fond 24 fixé sur le support 26. De plus, dans cet exemple, les bras radiaux 27 du corps central 23 ne s'étendent pas jusqu'à la face interne de la paroi latérale 21, mais restent cependant suffisamment grands pour isoler les poches 29 les unes des autres.

Les exemples de boutons-manipulateurs des figures 2a, 2b, et 3a, 3b, sur lesquels les commandes sont assurées par des appuis respectivement radiaux et axiaux sur les poches accessibles par les ouvertures, présentent les mêmes avantages que l'exemple des figures 1a et 1b et peuvent également être actionnés du bout des doigts par l'utilisateur, et avec une bonne sélectivité des commandes.

Lorsque l'organe commandé est un organe de sécurité, orienté et/ou verrouillé dans une position qui ne doit pas être modifiée accidentellement ou par inadvertance, par une compression intempestive d'une poche émettrice déformable, le bouton-manipulateur utilisé est de préférence une variante de celui des figures 3a et 3b et tel que celui représenté sur les figures 4a et 4b. Sur celles-ci, la surface latérale 31 est celle d'un couvercle 32 en forme de disque relativement épais et constituant un carter de protection présentant, dans sa face tournée vers le support ou planche de bord 36, un évidement central dans lequel est engagé et fixé un noyau arrondi 33 solidaire de l'extrémité d'une tige centrale rigide 35 en saillie sur une embase 34 de fixation du bouton-manipulateur sur le support 36. Dans sa face tournée vers l'embase 34 et espacée de cette dernière, le carter 32 présente également trois alvéoles régulièrement réparties autour de l'évidement centrale de liaison au noyau 33, et dans chacun desquels est logée une poche émettrice déformable 39, dont une partie est directement accessible de l'extérieur par une ouverture circulaire ménagée dans une plaque annulaire 37 fixée autour du noyau 33 et retenant chaque poche 39 dans son évidement. Dans cet exemple, les tubes de liaison des poches 39 passent dans des canaux ménagés dans la tige centrale 35 et le noyau 33, et débouchant dans le fond des alvéoles de logement des poches 39. La commande se fait donc par "en-dessous", en introduisant le bout des doigts entre l'embase 36 et le carter 32 et en comprimant au moins une poche 39 vers le fond de son alvéole au travers de l'ouverture correspondante dans la plaque 37.

Dans cet exemple, il est également possible que les poches 39 soient logées dans un carter creux et séparées les unes des autres par des bras radiaux de liaison du carter au noyau central 33.

Dans toutes les variantes, les poches émettrices déformables sont logées dans une enveloppe rigide, en forme de cuvette retournée et à fond fermé, dans laquelle les poches sont retenues autour d'une tige centrale solidaire de la cuvette et la reliant à l'embase de fixation au support.

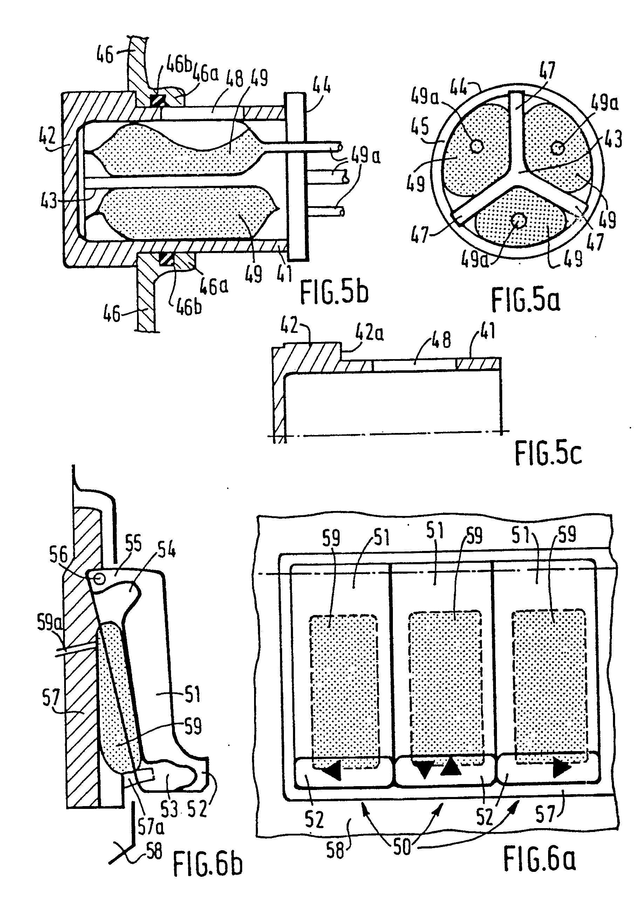

Sur les figures 5a à 5c, on a représenté un autre exemple de manipulateur à contact direct sur les poches émettrices, mais ce manipulateur n'est plus du type fixé sur son support, mais escamotable dans ce dernier. Ce support 46 est, comme dans les exemples précédents, la planche de bord dans laquelle est ménagé un orifice circulaire entouré par un rebord 46a en surépaisseur vers l'intérieur du tableau de bord, et dans lequel est logé un mécanisme de verrouillage, par exemple à bille, schématisé en 46b, destiné à immobiliser le manipulateur en position sortie et aussi en position escamotée par rapport au support 46. Ce manipulateur comprend un carter tubulaire à paroi latérale sensiblement cylindrique 41, qui est ouvert à une extrémité axiale et complètement fermé à l'autre extrémité axiale par un couvercle 42, dont la partie périphérique se raccorde à la paroi latérale 41 par une sur-épaisseur formant un épaulement 42a venant en butée contre la périphérique externe de l'ouverture du support 46, afin de limiter l'enfoncement du manipulateur en position de repos, escamotée ou rentrée, dans le support 46 (voir figure 5b). Le manipulateur comprend également un corp interne (43) muni de trois bras (47) s'étendant à la fois radialement à 120° l'un de l'autre et axialement, et solidaire par l'extrémité du côté opposé au couvercle 42 d'un fond 44 en forme de disque circulaire. Dans chacune des trois alvéoles délimitées entre les bras 47 du corps interne 43 est logée une poche émettrice déformable 49, dont le tube 49a de liaison à la poche réceptrice correspondante passe dans un trou ménagé dans le fond 44. Le corps interne 43 et les trois poches 49 logées dans leur alvéole sont entourés d'une gaine souple 45, réalisée en un manchon d'un film mince et élastique, ce qui facilite le montage et améliore l'aspect esthétique des poches 49, de sorte que l'ensemble constitué du fond 44, du corps 43 et des poches 49 peut être facilement introduit dans le carter, jusqu'à ce que le fond 44 vienne en butée contre l'extrémité de la paroi latérale 41, qui présente trois ouvertures 48 régulièrement répartie en direction circonférentielle, en centrées à 120° l'une de l'autre et dont chacune constitue une ouverture d'accès à une alvéole pour comprimer directement la poche 49 qui s'y trouve. Après solidarisation de la paroi latérale 42 sur le front 44, le manipulateur est prêt à fonctionner. A partir de la position de repos, dans laquelle le manipulateur est rétracté ou escamoté dans le support 46, comme représenté sur la figure 5b, lorsque l'utilisateur veut transmettre un ordre de commande, il saisit le manipulateur par son couvercle 42 et le tire axialement vers l'extérieur du support 46, jusqu'à la venue du fond 44 en butée contre le rebord 46a, et le mécanisme de verrouillage 46b bloque alors le manipulateur en position sortie ou de service. Dans cette position, il suffit alors à l'utilisateur de comprimer du doigt l'une au moins des poches 49 par l'ouverture 48 correspondante. Après l'émission du ou des ordres de commande souhaités, l'utilisateur renfonce le manipulateur en position escamotée, dans laquelle il est à nouveau bloqué par le mécanisme de verrouillage 46b.

Le manipulateur de cet exemple peut présenter de nombreuses formes différentes, notamment en section transversale, cette dernière pouvant être par exemple polygonale. Le carter 41, 42 et le corps interne 43 ne servent que de support des poches 49, dont chacune peut être d'un volume de 1,1 cm$^3$ par exemple, et remplie avant ou après le montage, ce qui autorise une bonne adaptation du manipulateur au style de la planche de bord.

Sur les figures 6a et 6b, on a représenté un manipulateur à contact indirect d'un type dit "linéaire", comprenant trois boutons-poussoirs 50 disposés côte-à-côte, et dont chacun comporte un poussoir ou basculeur 51 en forme de languette sensiblement rectangulaire dont la partie inférieure 52 est en saillie du côté de sa face externe et recourbée du côté de sa face interne en formant une rainure 53 fermée de chaque côté par deux voiles minces latéraux 5 4 s'étendant jusqu'à l'extrémité de la partie supérieure 55 de la languette, qui est repliée du côté de la face interne. Par sa partie supérieure recourbée 55, le poussoir est monté basculant, autour d'un axe 56 transversal qui traverse cette partie 55 et est commun aux trois poussoirs 51, sur une embase commune 57 de fixation au support 58, tel que la planche de bord. L'embase 57 présente, en regard de chaque poussoir 51, un évidement ou une alvéole dans lequel est logée une poche émettrice déformable 59 retenue en partie basse par une butée 57a portée par l'embase 57 et limitant l'alvéole correspondante, tandis que le tube de liaison 59a correspondant travers un trou percé dans l'embase 57, au voisinage de la partie supérieure de la poche 59 correspondante. Par appui sur un poussoir 51, on provoque son pivotement autour de l'axe 56, vers l'embase 57, et la compression de la poche 59 correspondante, la butée 57a se logeant alors dans la rainure 53 pour autoriser une compression maximale de la poche 59. Dans cet exemple également, la forme du poussoir est relativement indépendante de son fonctionnement et peut être adaptée au style de la planche de bord. Le manipulateur peut comporter plus de trois boutons-poussoirs, munis chacun d'une seule poche déformable, et dont l'une peut être une poche émettrice de déblocage ou d'embrayage, en communication avec une poche réceptrice de déblocage ou d'embrayage qui, lorsqu'elle est gonflée à la suite de la compression de la poche émettrice correspondante, supprime ou au moins diminue très sensiblement le frottement entre deux surfaces de contact qui, par frottement mutuel maintiennent le rétroviseur dans une position particulière. Cette commande de déblocage précède les commandes de pivotement qui s'en trouvent facilitées, comme cela est plus complètement décrit ci-dessous en référence aux figures 16a à 18c.

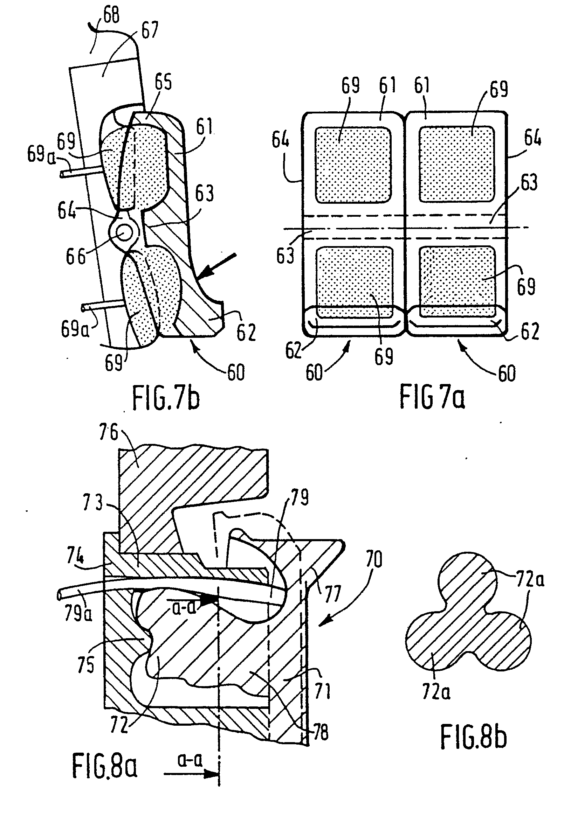

Sur les figures 7a et 7b, on a représenté un second exemple de manipulateur linéaire à contact indirect, comprenant deux boutons-poussoirs doubles 60 (et non trois boutons-poussoirs simples 50 comme dans l'exemple précédent). Chaque bouton-poussoir 60 comporte un poussoir 61 en forme de languette rectangulaire dont la partie inférieure 62 est surépaissie et en saillie du côté de sa face externe, la partie centrale 63 est surépaissie et en saillie du côté de sa face interne, et la partie supérieure 65 recourbée du côté de sa face interne, et ces trois parties sont reliées les unes aux autres par deux voiles latéraux minces 64, de forme triangulaire, dont la plus grande dimension, en direction perpendiculaire à la face externe de la languette 61, est au niveau de la partie centrale 63, dans une zone traversée par un axe transversal 66, commun aux deux boutons-poussoirs 60, et autour duquel chaque poussoir 61 est ainsi monté basculant. L'axe 66 est supporté par une embase 67 de fixation sur la planche de bord 68 par tout moyen convenable connu, par exemple par vissage, encliquetage, collage etc., l'embase étant commune aux deux boutons-poussoirs 60. Cette embase 67 présente, pour chaque bouton-poussoir 60, deux évidements ou alvéoles, dont chacun est en regard respectivement de l'une des deux moitiés correspondantes du poussoir 61, de part et d'autre de l'axe 66, et dans chacun de ces deux évidements est logée une poche émettrice déformable 69, dont le tube de liaison 69a passe dans un trou percé dans le fond de l'évidement correspondant et au travers de l'embase 67. Ainsi, que le poussoir 61 soit basculé dans l'un ou l'autre sens autour de l'axe 66, il comprime une poche 69 pour émettre un ordre de commande vers le récepteur correspondant. Les deux poches 69, disposées entre chaque poussoir 61 et l'embase commune 67 peuvent être de même volume ou de volumes différents. L'ensemble formé par l'embase 67 et les poussoirs 61 constitue une enveloppe rigide protégeant chaque poche 69. Dans cet exemple, on peut assurer quatre fonctions avec les deux boutons-poussoirs doubles 60, ce qui permet de réduire l'encombrement nécessaire au manipulateur de commande du rétroviseur, et de grouper une fonction annexe, par exemple une commande d'embrayage ou de déblocage, avec les trois commandes de positionnement du rétroviseur. Bien entendu, ce mécanisme peut être généralisé à plus de deux boutons-poussoirs 60 disposés côte-à-côte et remplissant chacun deux fonctions, du fait qu'il est équipé de deux poches déformables, et la forme du manipulateur peut être adaptée au style de tableau de bord.

Sur les figures 8a et 8b, on a représenté un exemple de manipulateur oscillant 70, qui comprend un poussoir oscillant 71 présentant une tête 72 par laquelle il est engagé et guidé dans ses pivotements dans un corps tubulaire 73 à fond fermé 74 présentant un bossage central 75 sensiblement hémisphérique, en saillie vers l'intérieur du corps 73 et engagé dans un évidement hémisphérique ménagé dans l'extrémité de la tête 72, afin de constituer une rotule d'articulation du poussoir 71 dans le corps 73. Ce dernier assure le montage du manipulateur 70 sur un support 76, tel que la planche de bord, en étant retenu dans un orifice du support 76. Le poussoir oscillant 71 comprend également une plaque de poussée 77, à l'extérieur du corps tubulaire 73 et qui est conformée, dans sa partie périphérique, à la fois en butée en saillie vers l'extérieur (c'est-à-dire vers l'utilisateur) pour limiter les glissements du doigt de l'utilisateur lors de l'actionnement, et en jupe mince en saillie vers l'intérieur (vers le corps 73 et le support 76) pour protéger le manipulateur contre la pénétration de corps étrangers vers les trois poches déformables 79 logées dans un évidement ménagé dans le corps tubulaire 73, entre la face interne de sa paroi latérale du côté de son extrémité ouverte et la face externe d'une partie amincie au col 78 qui relie la tête 72 à la plaque de poussée 77. Les poches 79, dont chacune a un volume de 2 ou 3 $cm^3$ par exemple, sont réparties régulièrement en direction circonférentielle autour du col 78, et chaque poche 79 s'étend par exemple en arc de cercle sous-tendu par un angle au centre de 120°. La tête 72 guidée par rotulage en 75 sur le fond 74 du corps 73, est extérieurement conformée (voir figure 8b) en came de déformation à trois lobes 72a de compression des poches 79, lorsqu'une poussée excentrée est exercée de l'extérieur sur le poussoir oscillant 71. Dans cet exemple, les tubes de liaison 79a des poches 79 passent entre la tête 72 et le corps 73 et sortent de ce dernier par des trous percés dans son fond 74. Ce manipulateur comprend donc uniquement deux pièces rigides , à savoir le poussoir 71 et le corps tubulaire 73, et les trois poches déformables 79, et, comme il y a toujours au moins une poche qui est au moins partiellement remplie, lorsque le dispositif a été monté, le poussoir oscillant 71 est indémontable et est retenu dans le corps tubulaire 73 par au moins une poche, dès que le manipulateur est en place.

Comme dans les exemples précédents, le volume de poche est choisi en fonction des déplacements prévus pour l'organe commandé. La forme de came intérieure tri-lobée de la tête 72 permet non seulement de vider les poches 79 et d'utiliser tout le liquide que l'une au moins d'entre elles contient, mais également de privilégier les déplacements selon certains axes, lorsque chaque lobe 72a est en face d'une poche 79, ou pour déplacer l'organe commandé, par exemple le rétroviseur, suivant deux axes à la fois, lorsque les lobes 72a de la tête appuient partiellement et simultanément sur deux poches 79.

La figure 9 représente un second exemple de manipulateur à poussoir oscillant guidé par rotulage dans un corps tubulaire et à came de compression de poches déformables logées dans le corps. Mais, dans ce second exemple, le corps tubulaire 83, par lequel le manipulateur 80 est comme dans le premier exemple monté dans un orifice du support 86, présente une portion de son passage central qui est aménagée en portée de glissement en calotte sphérique concave qui coopère avec une portée de glissement en ca lotte sphérique convexe, de courbure complémentaire, présentée par la surface latérale externe d'une jupe tubulaire 82 qui constitue simultanément la came du bouton-poussoir 81. Ce dernier comprend, en plus de la jupe tubulaire 82 qui est engagée dans le corps tubulaire 83, une plaque de poussée 87, à l'extérieur du corps 83 et du côté du centre de courbure de la portée concave du corps 83. Du côté opposé à la plaque de poussée 87, le corps 83 est fermé par un fond 84, dont la partie centrale supporte un plot 85, en forme de bulbe, qui est en saillie vers l'intérieur du corps 83 et engagé avec un jeu radial important dans la jupe 82. De la sorte, la surface interne de la jupe 82 et la surface externe du plot central 85 délimitent entre elles un évidement annulaire dans lequel sont logées trois poches émettrices déformables 89, régulièrement réparties autour du plot 85 en direction circonférentielle, et dont chacune s'étend sensiblement selon un arc de cercle sous-tendu par un angle au centre de 120°. Les tubes de liaison (non représentés) des poches émettrices 89 aux récepteurs de positionnement correspondant passent entre la jupe 82 et le plot central 85, et traversent des trous ménagés dans le fond 84. Ainsi, tout appui excentré exercé par l'utilisateur sur la plaque de poussée 87 du poussoir oscillant 81, entraîne un mouvement de rotule de ce dernier dans le corps 83 par la jupe 82 qui vient comprimer au moins une poche 89 contre le plot central 85, ce qui commande le transfert d'un volume de fluide hydraulique sous pression vers le ou les récepteurs de positionnement correspondant du rétroviseur.

Comme dans l'exemple précédent, le volume de chaque poche 89 peut être de l'ordre de 2 ou 3 $cm^3$, et être adapté aux courses de positionnement nécessaires du rétroviseur, et aucun verrouillage en position du poussoir oscillant n'est assuré. De plus, la forme extérieure du manipulateur peut être adaptée au style du tableau de bord et enfin le manipulateur est indémontable après mise en place de ses éléments et remplissage des poches 89. Par contre, dans l'exemple de la figure 9, le remplissage des poches 89 en fluide hydraulique doit intervenir après la mise en place et le mécanisme comporte trois pièces rigides à savoir le bouton-poussoir oscillant 81, le corps 83 et le fond 84 avec son plot 85, ce fond 84 se rapportant sur le corps 83, alors que dans l'exemple des figures 8a et 8b, le mécanisme ne comporte que deux pièces rigides, et le remplissage des poches peut être effectué avant ou après le montage.

Sur les figures 10a à 10c, on a représenté un exemple de manipulateur à poussoir dit "flottant", car constitué d'un poussoir essentiellement plat, représenté en plan sur la figure 10b, et monté mobile d'une part avec un jeu limité parallèlement à son plan et, d'autre part, sur une course utile perpendiculairement à son plan, par rapport à une embase représentée en plan sur la figure 10a.

Ce manipulateur 90, représenté en coupe transversale sur la figure 10c, comprend une embase 91, par laquelle le manipulateur est fixé sur la planche de bord (non représentée), et qui a la forme d'une cuvette rectangulaire à fond sensiblement plat entourée d'un rebord d'épaisseur relativement faible 92. Trois évidements sont ménagés dans la face supérieure ou interne du fond de l'embase 91, et chacun loge partiellement l'une des trois poches émettrices déformables du manipulateur, dont l'une est une poche 93 centrale et inférieure (sur la figure 10a) et les deux autres des poches latérales 94 et 95, sensiblement en forme de C à concavité tournée l'une vers l'autre, et qui se recouvrent partiellement l'une l'autre par une portion d'extrémité 94a de la poche 94 qui est disposée au-dessus d'une portion d'extrémité 95a de la poche 95, le recouvrement étant assuré dans la partie centrale de l'embase 92, du côté opposé à la poche 93, tandis que les trois tubes de liaison 96, reliant chacun l'une des poches au récepteur de positionnement correspondant, passent dans des trous ménagés dans la partie centrale du fond de l'embase 92, dans la zone délimitée entre les trois poches 93, 94 et 95, dont chacune est retenue dans son évidement ayant, en plan, la forme d'une empreinte correspondante. Le poussoir 97 est conformé en couvercle rectangulaire, de dimensions légèrement supérieures à celles de l'embase 91, et plat sur sa face externe et il comporte sur son pourtour un rebord 98 en saillie du côté de sa face interne et dans l'extrémité inférieure présente, en saillie vers l'intérieur du couvercle 97, un bourrelet périphérique 99 par lequel il est élastiquement encliqueté sur le pourtour de l'embase 91, de sorte que le couvercle peut se déplacer par rapport à cette dernière dans une direction permettant de comprimer les poches 93, 94 et 95, enfermée entre l'embase 91 et le poussoir 97, et également avec un faible jeu dans le plan perpendiculaire à cette direction. Pour comprimer les poches de manière sélective, le poussoir 97 présente, en saillie sur sa face inférieure, quatre cames dont l'une, non visible sur la coupe de la figure 10c est directement à l'aplomb au-dessus de la poche 93, et dont les trois autres, visibles en coupe sur la figure 10c sont une came latérale 100 de section transversale sensiblement triangulaire, à l'aplomb de la portion latérale de la poche 94, une came latérale 101, de section trapézoïdale à petite base tournée vers le bas, à l'aplomb de la portion latérale de la poche 95, et une came centrale 102, également de section trapézoïdale, à l'aplomb des portions superposées 94a et 95a des deux poches 94 et 95. Cette came centrale 102 est la plus épaisse et d'une épaisseur telle qu'au repos, en l'absence d'appui sur le poussoir 97, la came 102 affleure la portion de poche 94a.

Les formes des cames 100, 101 et 102 et de la came non représentée sont telles qu'elles permettent d'utiliser tout le volume de fluide hydraulique nécessaire aux débattements du rétroviseur en coopération avec les poches, dont les volumes peuvent varier entre 0,5 et 2 cm$^3$ par exemple, et après une course d'approche x qui est pratiquement nulle pour la came 102 et toujours faible pour les trois autres cames. Ce manipulateur, qui ne comporte que deux pièces rigides pouvant être adaptées au style de la planche de bord, et dont l'installation est aisée, permet, grâce aux trois poches dont deux sont partiellement superposées, et aux quatres cames, de remplir quatre fonctions différentes, dont trois sont, comme dans les exemples précédents, des fonctions de positionnement du rétroviseur par pivotement dans des directions particulières, par une compression de la poche 93 et des parties non superposées des poches 94 et 95, la compression étant obtenue par appui sur le poussoir flottant 97, au niveau des cames 100, 101 et de celle non représentée, qui sont repérées par les symboles H, B et α sur le dessus du poussoir 97. La quatrième fonction est une fonction particulière qui, dans l'exemple d'application a la commande de pivotement d'un rétroviseur, peut être une commande de mise en place rapide de ce rétroviseur dans une position prédéterminée, par compression des portions de poches superposées 94a et 95a, la compression étant obtenue par appui sur le poussoir 97 au niveau du symbole x. La course de poussoir 97 est telle que, lorsque l'utilisateur appuie au niveau de cette zone x, les cames 100 et 101 du poussoir 97 sont pratiquement tangentes aux poches 94 et 95. Le fait d'appuyer simultanément sur ces deux poches a pour effet d'orienter le rétroviseur suivant un axe Y, Y' privilégié, prédéterminé et représenté sur la figure 10d, qui est explicitée ci-dessous, tandis que le réglage angulaire du positionnement s'effectue par appui sur la zone repérée en α sur le poussoir 97, et par compression de la poche 93. Le rapport du volume des portions de poches 94a et 95a qui sont superposées au volume de chacun des poches 94 et 95 est choisi pour que la fonction d'approche rapide soit remplie. Si la position de l'axe Y, Y' n'est pas exactement celle qui est désirée par l'utilisateur, la correction est assurée en comprimant séparément l'une des poches 94 et 95, par appui au niveau de l'une des deux zones marquées H et B sur le poussoir 97.

Sur la figure 10d, le rectangle A, A', B, B' représente l'enveloppe des positions extrêmes de l'oeil du conducteur d'une voiture. Cependant, dans la majorité des cas, l'oeil se déplace sensiblement sur un axe transversal, légèrement incliné Z, Z', privilégié et lié au poste et/ou à la position de conduite. L'axe Y, Y' est choisi perpendiculaire à l'axe Z, Z', si bien qu'après le retour de l'oeil du conducteur sur cet axe Y, Y', par appui sur la zone de mise en place rapide x, le réglage est complété en faisant pivoté le rétroviseur d'un angle α autour de cet axe Y, Y', par appui sur la zone α du poussoir 97.

Sur la figure 10e, on a schématisé en 103 un boîtier de rétroviseur dans le miroir 104 est positionné par trois récepteurs interposé entre le miroir et le carter du boîtier. Les récepteurs 105 et 106 sont respectivement reliés aux poches 95 et 94, et le récepteur 107 à la poche 93. L'appui sur la zone H ou B commande respectivement l'augmentation du volume du récepteur 106 ou 105, ce qui fait respectivement pivoter le rétroviseur vers le haut ou vers le bas. L'appui sur la zone α commande, par augmentation du volume du récepteur 107, le pivotement du miroir autour de l'axe passant par les centres des récepteurs 105 et 106, et l'appui sur la zone x commande une action simultanée sur les deux récepteurs 105 et 106, ce qui déplace immédiatement le rétroviseur de sorte que l'oeil du conducteur soit sur l'axe Y, Y'.

Un tel manipulateur à trois poches et quatre fonctions peut être généralisé à un manipulateur comportant n poches déformables et n + 1, n + 2... n + p fonctions, s'il y a p recouvrements d'au moins deux poches parmi les n disponibles dans le manipulateur.

Dans une variante plus simple, les poches 94 et 95 ne présentent aucun recouvrement, de sorte qu'on retrouve un manipulateur à trois poches déformables pour commander le positionnement du rétroviseur par la combinaison de trois commandes ou fonctions différentes.

Le manipulateur 110, schématiquement représenté sur les figures 11a et 11b est une variante de celui décrit ci-dessous en référence aux figures 10a à 10c, et il fonctionne selon les mêmes principes, c'est-à-dire qu'il permet d'assurer trois commandes de positionnement du rétroviseur et une commande de mise en place rapide du rétroviseur dans une position prédéterminée. La différence essentielle est que l'embase de ce manipulateur 110 présente une empreinte supplémentaire dans la partie centrale de son fond, et dans cette empreinte supplémentaire est partiellement logée et retenue une poche déformable supplémentaire 112, autour de laquelle sont réparties une poche 113, en position inférieure sur la figure 11a et correspondant à la poche 93 de l'exemple précédent, et deux poches latérales 114 et 115, en forme de L qui se recouvrent partiellement dans la partie supérieure de l'embase (sur la figure 11a) et qui correspondent aux poches 94 et 95 de l'exemple précédent. En regard de la poche centrale 112, sans recouvrement avec les autres poches, le poussoir 117 (voir figure 11b) présente une came supplémentaire et centrale 118, en forme de portée hémisphérique, dont le volume correspond à celui de la poche 112, soit par exemple 2 cm³ correspondant à une épaisseur de 0,5 cm et une section de 4 cm². La forme hémisphérique de la came centrale 118 permet, lorsque le poussoir 117 est enfoncé par appui sur la zone centrale V du poussoir, au niveau de la came centrale 118, de comprimer simultanément au moins une autre poche 113, 114 ou 115, par pivotement du poussoir 117 sur la came hémisphérique 118. La course d'approche de la came hémisphérique 118 par rapport à la poche centrale 112 est la plus faible des courses d'approche de toutes les cames vis-à-vis des poches correspondantes, et la course maximum de cette came 118 est telle qu'après l'enfoncement de cette came 118 sur sa course maximum, la came 122, qui est présentée par le poussoir 117 en regard des portions superposées des poches 114 et 115, du côté opposé à la came 119 de compression de la poche 113, vient affleurer les deux portions superposées des poches 114 et 115. Le moindre pivotement du poussoir 117 par rotation sur la came hémisphérique 118, obtenu par appui sur la zone x du poussoir 117 permet alors de comprimer les poches superposées pour la mise en place rapide du rétroviseur. Pour le reste, ce manipulateur fonctionne comme celui de l'exemple précédent. Le manipulateur des figures 11a et 11b, comportant quatre poches, dont deux sont partiellement superposées, et cinq cames, remplit ainsi cinq fonctions de commande, et peut servir à la commande d'accessoires autres qu'un rétroviseur. Dans le cas de la commande d'un rétroviseur, la fonction supplémentaire liée à la présence de la poche 112, qui est la première comprimée lorsque le poussoir 117 est actionné, peut être une commande d'embrayage ou de déblocage du rétroviseur, comme décrit ci-dessous en référence aux figures 16a à 18c.

Comme les précédents, ce manipulateur peut également être adapté au style du tableau de bord, et les valeurs relatives des volumes des poches peuvent être choisies en fonction des courses désirées de l'organe commandé.

Sur la figure 12, on a schématiquement représenté un dispositif de commande comportant un seul manipulateur utilisable pour commander sélectivement l'un ou l'autre de deux organes commandés, par exemple un rétrovisseur extérieur du côté droit et un rétroviseur extérieur du côté gauche sur un véhicule automobile. La position du rétroviseur de droite est déterminée par trois poches réceptrices déformables de positionnement 130, 131 et 132, tandis que la position du rétroviseur de gauche est déterminée par les trois poches réceptrices déformables de positionnement 133, 134 et 135. Chacune des poches réceptrices de positionnement 130 à 135 est en communication, par un canal d'entrée de faible volume, avec une poche déformable d'isolement 136 à 141, de volume nettement plus faible que celui de la poche réceptrice de positionnement correspondante, et les poches d'isolement 136 et 139 sont raccordées en parallèle à un même tube de liaison 142, tandis que les poches d'isolement 137 et 140 sont raccordées en parallèle au même tube de liaison 143 et que les poches d'isolement 138 et 141 sont raccordées en parallèle au même tube de liaison 144. Chacun des tubes de liaison 142, 143 et 144 est raccordé à la poche déformable émettrice de positionnement correspondante, respectivement 145, 146 et 147, ces trois poches émettrices de positionnement étant logées dans le corps 149, fermé par un couvercle 150, du manipulateur à commutation de voies 148, ce corps 149 présentant trois ouvertures par chacune des-quelles l'utilisateur peut exercer un appui direct sur une poche correspondante parmi les trois poches émettrices de positionnement 145 à 147, dont chacune est logée dans un compartiment correspondant du corps 149. Ce dernier est conformé en poignée rattachée par un manche tubulaire 151 à une embase 152 sensiblement rectangulaire montée pivotante autour de son axe longitudinal O, O' sur un support non représenté sur la figure. De part et d'autre de l'axe longitudinal O, O', l'embase 152 présente l'une de deux fenêtres oblongues et symétriques dans chacune desquelles est logée l'une de deux poches déformables émettrices d'obturation 153 et 154, qui sont retenues sur le support et chacune raccordées par l'un de deux tubes de liaison 155 et 156 à l'une de deux poches déformables réceptrices d'obturation 157 et 158. Ces poches 157 et 158 sont des poches déformables allongées maintenues respectivement dans le carter du rétroviseur droit et dans le carter du rétroviseur gauche, l'une 157 en configuration de transmission de pression avec les trois poches déformables d'isolement 136 à 138 en amont des poches déformables réceptrices de positionnement 130 à 132 du rétroviseur droit, et l'autre 158 en configuration de transmission de pression avec les trois poches déformables d'isolement 139 à 141, en amont des poches déformables réceptrices de positionnement 133 à 135 du rétroviseur gauche. Ainsi, lorsque l'utilisateur pivote l'organe de commande à actionnement manuel constitué par le corps 149 et l'embase 152 vers la gauche sur la figure 12, autour de l'axe O, O', l'embase 152 comprime la poche émettrice d'obturation 153, ce qui transfère, par le tube 155, du fluide hydraulique sous pression dans la poche réceptrice d'obturation 157, qui augmente de volume et comprime simultanément les trois poches d'isolement 136 à 138, réduites à leur volume minimal, de sorte que les trois poches réceptrices de positionnement 130 à 132 du rétroviseur droit sont isolées des tubes de liaison 142 à 144. Il en résulte que toute compression par l'utilisateur des poches émettrices de positionnement 145 à 147 dans le corps 149 du manipulateur 148 est sans conséquence sur l'état des poches réceptrices de positionnement du rétroviseur droit, et que seules les poches réceptrices de positionnement 133 à 135 du rétroviseur gauche peuvent recevoir des ordres de commande modifiant l'orientation de ce rétroviseur gauche, par l'intermédiaire des poches d'isolement 139 à 141, non comprimées, et des tubes de liaison 142 à 144, qui passent dans le manche tubulaire 151 pour être raccordées aux poches émettrices de positionnement 145 à 147. Inversement, lorsque le manipulateur 148 est pivoté vers la droite autour de l'axe O, O' de son embase, la poche émettrice d'obturation 154 est comprimée, ce qui gonfle la poche réceptrice d'obturation 158 et comprime les poches d'isolement 139 à 141, de sorte que les poches réceptrices de positionnement 133 à 135 du rétroviseur gauche sont isolées des poches émettrices de positionnement 145 à 147. Ceci interdit le changement de l'orientation du rétroviseur gauche, et seul le positionnement du rétroviseur droit peut être modifié par action sur les poches émettrices de positionnement 145 à 147, en communication par les tubes 142 à 144 et les poches d'isolement 136 à 138 avec les poches réceptrices de positionnement 130 à 132.

Ce manipulateur 148, à commutation des voies de commande vers les deux rétroviseurs combine le principe du manipulateur à contact direct sur trois poches déformables émettrices de positionnement, reliées à trois poches déformables réceptrices de positionnement de l'organe commandé, avec un pivotement d'ensemble du manipulateur, d'un côté ou de l'autre, pour ne permettre la transmission des ordres de commande de positionnement que vers l'un ou l'autre de deux organes commandés, par exemple sur la gauche pour commander le rétroviseur de gauche et sur la droite pour commander l'orientation du rétroviseur de droite. Par rapport aux poches réceptrices de positionnement 130 à 132 et 133 à 135, les petites poches d'isolement respectivement 136 à 138 et 139 à 141 remplissent la fonction de valves empêchant le fluide hydraulique provenant des poches émettrices de positionnement 145 à 147 de pénétrer respectivement dans les poches réceptrices de positionnement 130 à 132 et 133 à 135, lorsque respectivement la poche réceptrice d'obturation 157 ou 158 est gonflée par la compression respectivement de la poche émettrice d'obturation 153 ou 154. Dans cet exemple, le volume des poches émettrices de positionnement 145 à 147 est le double de celui des poches réceptrices de positionnement 130 à 135, et il est bien évident que chaque poche émettrice de positionnement 145 à 147 est reliée en parallèle aux deux poches réceptrices de positionnement qui commandent le positionnement dans le même sens des deux rétroviseurs orientables.

Sur les figures 13 et 14, on a représenté un connecteur utilisé pour raccorder des tubes de liaison qui, en l'absence de ce connecteur seraient trop longs et trop difficiles à installer entre des poches déformables émettrices et des poches déformables réceptrices correspondantes, par exemple des poches de positionnement d'un rétroviseur. De plus, comme déjà exposé dans la demande de brevet européen mentionnée ci-dessus, un avantage lié à la présence d'un tel connecteur est, en cas d'une avarie, d'un circuit hydraulique dans la partie de circuit située du côté de la poche émettrice ou dans la partie de circuit du côté de la poche réceptrice, que seule la partie défaillante est à remplacer. Un tel connecteur permet donc de raccorder et de séparer les deux parties complémentaires d'un circuit hydraulique sans avoir à vider les poches émettrices et/ou réceptrices.

Ce connecteur 160 comprend un corps moulé d'une seule pièce en une matière synthétique et constitué de deux volets 161 et 162, articulés l'un par rapport à l'autre par une charnière souple formée par une languette étroite 164 entre deux lignes parallèles et amincies de matière 165, formant les axes de pliage X, X' et Y, Y'. L'un des volets constitue une embase 161, dont la face externe porte, en saillie, des pattes 166 de fixation par encliquetage élastique sur un support 167, et dont le bord opposé à la charnière souple 163 porte deux crochets 168 élastiquement déformables pour permettre la fermeture amovible du corps par repliage du volet 162, formant couvercle, contre l'embase 161 et encliquetage élastique des crochets 168 par-dessus le bord du couvercle 162 du côté opposé à la charnière 163, comme représenté en coupe transversale sur la figure 13. Chacun des deux volets 161 et 162 présente, dans sa face interne, trois évidements ou empreintes de forme rectangulaire, et chacun des trois évidements de l'un des volets vient en regard d'un évidement correspondant de l'autre volet, lorsque ces deux volets sont repliés et fixés l'un contre l'autre. Dans chacun des évidements du volet 161 est logée une poche déformable 169, de forme correspondante, dont le tube de liaison 169a passe dans l'une des échancrures prévues à cet effet dans le bord du volet 161. De même, des poches déformables 170 sont logées dans les trois évidements du volet 162, et leur tube de liaison 170A passe également dans des échancrures pratiquées dans le bord de ce volet 162, du côté opposé à celui par lequel les tubes 169a sortent du connecteur. Lorsque les deux volets 161 et 162 sont fixés l'un contre l'autre, ce qui signifie que le connecteur est fermé, les poches 170 sont chacune comprimées contre l'une des poches 169, de sorte que les augmentations de volume de l'une entraîne une diminution de l'autre du même volume, les poches étant deux à deux en configuration de transmission de pression. Si les trois tubes de liaison 169a sont raccordés aux trois poches déformables émettrices de positionnement d'un manipulateur de commande du positionnement d'un rétroviseur, alors les poches 169 constituent des poches réceptrices de connexion, dont les augmentations de volume provoquent des diminutions des volumes des poches 170, constituant des poches émettrices de connexion, dont les tubes de liaison 170a sont raccordés aux trois poches réceptrices de positionnement de ce rétroviseur, auxquelles les volumes de fluide hydraulique chassés des poches 170 du connecteur sont transmis pour assurer ce positionnement.

Un tel connecteur peut être interposé entre un manipulateur selon les exemples décrits en référence aux figures 1a à 6b et 8a à 10c, et des récepteurs de positionnement correspondants. Mais il peut, dans des variations, comporter plus de trois poches émettrices et réceptrices de connexion, pour relayer également des ordres d'embrayage ou de déblocage, en combinaison avec des manipulateurs selon les figures 7a, 7b et 11a, 11b. Enfin, il peut être monté entre les poches d'isolement 136 à 138 et 139 à 141 d'une part, et, d'autre part les points de bifurcation des tubes 142 à 144, dans un dispositif de commande selon la figure 12.

Cependant, pour convenir à un dispositif équipé d'un manipulateur à commutation des voies, on propose une variante adaptée de connecteurs, qui

est schématisée sur la figure 15.

Ce connecteur 171 à commutation des voies comprend, comme celui de l'exemple précédent, un unique corps de connecteur, moulé d'une seule pièce en une matière synthétique, et constitué de deux volets 172 et 173, sensiblement rectangulaire vus en plan, articulés l'un par rapport à l'autre sensiblement autour d'un axe O, O′ par une charnière souple 174, l'une des volets constituant une embase 172 de fixation du connecteur par tout moyen approprié, par exemple par encliquetage élastique, sur un support (non représenté), tandis que l'autre volet forme un couvercle 173 portant des moyens de fixation amovibles, également de tout type convenable connue, telle que des crochets 175 d'encliquetage élastique, pour fixer le couvercle 173 contre l'embase 172, par encliquetage de ces crochets 175 au-dessus du bord de l'embase 172, du côté opposé à la charnière 174. De même, comme dans l'exemple précédent, chacun des volets 172 et 173 présente, dans sa face interne, des évidements ou empreintes dans lesquels sont logées des poches déformables de forme correspondante, venant sélectivement en appui les unes contre les autres, en configuration de transmission de pression, lorsque le connecteur 171 est fermé par fixation du couvercle 173 contre l'embase 172. Plus précisément, comme ce connecteur 171 est destiné à être monté entre, d'une part, un manipulateur à commutation de voies, tel que celui de la figure 12, comprenant trois poches déformables émettrices de positionnement 145 à 147 et deux poches déformables émettrices d'obturation 153 et 154, et, d'autre part, deux organes commandés, tels que les rétroviseurs extérieurs gauche et droit d'un véhicule automobile, et dont chacun est positionné par l'action de trois poches déformables réceptrices de positionnement, telles que les poches 130 à 132 et 133 à 135 respectivement sur la figure 12, les volets 172 et 173 logent les poches déformables suivantes :

l'embase 172 reçoit, du côté de son bord opposé à la charnière souple 174, six poches déformables réceptrices de connexion 176 à 181, dont chacune est en communication par un canal de petit volume avec une petite poche déformable d'isolement respectivement 182 à 187, ces poches étant disposées symétriquement par groupe de trois de part et d'autre de l'axe médian transversal, perpendiculaire à l'axe d'articulation O, O′, et, de plus, ces poches sont raccordées en trois paires de poches symétriques appartenant aux deux groupes, la poche d'isolement 182 étant raccordée à la poche d'isolement 187 par un canal 188 au milieu duquel débouche l'extrémité aval d'un tube 189 de liaison à l'une des poches émettrices de positionnement, tel que la poche 145 sur la figure 12; de manière analogue, les poches d'isolement 183 et 186 sont en communication l'une avec l'autre par un canal 190 dans lequel débouche l'extrémité aval d'un tube 191 de liaison à une autre poche émettrice de positionnement, telle que la poche 146 du manipulateur de la figure 12, et les poches d'isolement 184 et 185 sont en communication l'une avec l'autre par un canal 192 dans lequel débouche l'extrémité aval d'un tube 193 de liaison à la troisième poche émettrice de positionnement 147 du manipulateur de la figure 12; les poches réceptrices de connexion 176 à 181 étant ainsi raccordées deux à deux à l'une respectivement des trois poches émettrices de positionnement 145 à 147 du manipulateur de commande par l'intermédiaire de leur poche d'isolement respectivement 182 à 187, de leur canal de raccordement 188, 190 ou 192, et de leur tube de liaison 189, 191 ou 193, qui s'étendent tous les trois perpendiculairement au plan des poches et des volets du connecteur.

le couvercle 173 reçoit, du côté de son bord opposé à la charnière 174, six poches émettrices de connexion 194 à 199, dont chacune est en communication par un tube de liaison respectivement 194a à 199a, avec une poche réceptrice de positionnement correspondante des deux rétroviseurs; plus précisément, les poches émettrices de connexion 194 et 199, qui sont en configuration de transmission de pression, lorsque le connecteur est fermé, avec respectivement les poches réceptrices de connexion 176 et 181 raccordées à la même poche émettrice de positionnement 145 du manipulateur de la figure 12, sont respectivement raccordées par leur tube de liaison 194a et 199a aux poches réceptrices de positionnement 130 et 133 commandant respectivement dans une même direction le positionnement des rétroviseurs droit et gauche; de manière analogue, les poches émettrices de connexion 195 et 198, en configuration de transmission de pression lorsque le connecteur 171 est fermé, avec respectivement les poches réceptrices de connexion 177 et 180 raccordées à la même poche émettrice de positionnement 146 du manipulateur de la figure 12, sont respectivement raccordées par leur tube de liaison 195a et 198a aux poches réceptrices de positionnement 131 et 134 commandant le positionnement dans une seconde direction respectivement des rétroviseurs droit et gauche, et enfin les poches émettrices de connexion 196 et 197, en configuration de transmission de pression avec respectivement les poches réceptrices de connexion 178 et 179 raccordées toutes deux à la même poches émettrices de positionnement 147 du manipulation, sont respectivement raccordées par leur tube de liaison 196a et 197a aux poches réceptrices de positionnement 132 et 135 commandant dans une troisième direction la positionnement respectivement des rétroviseurs droit et gauche. Du côté de la charnière 174, le couvercle 173 loge également deux ensembles de trois poches réceptrices d'obturation en série, le premier ensemble comprenant les poches réceptrices d'obturation 200, 201 et 202, reliées en série par de petits canaux, et chacun au niveau de l'une respectivement des trois poches émettrices de connexion 194 à 196 qui sont du même côté de l'axe médian transversal du connecteur, perpendiculairement à l'axe O, O', et symétriquement, le second ensemble comprend les poches réceptrices d'obturation 203, 204 et 205 reliées en série par de petits canaux et chacune au niveau de l'une respectivement des trois poches émettrices de connexion 197 à 199, qui sont du côté correspondant de cet axe médian transversal du connecteur 171. De plus, la poche réceptrice d'obturation centrale 201 du premier ensemble est en communication par le tube de liaison 206 avec l'une des deux poches émettrices d'obturation du manipulateur à commutation des voies, par exemple avec la poche 153 du manipulateur de la figure 12, tandis que la poche réceptrice d'obturation centrale 204 du second ensemble est en communication par le tube de liaison 207 avec l'autre poche émettrice d'obturation 154 du même manipulateur. Enfin, lorsque le connecteur 171 est fermé, les poches réceptrices d'obturation 200 à 205 sont en configuration de transfert de pression avec respectivement les poches d'isolement 182 à 187.

De la sorte, le connecteur 171 étant fermé, si l'utilisateur bascule le manipulateur 148 de la figure 12 vers la gauche sur cette figure, il comprime la poche émettrice d'obturation 153, ce qui chasse du fluide hydraulique sous pression par le tube 206 vers les poches réceptrices d'obturation 200 à 202, qui se gonflent et compriment respectivement les poches d'isolement 182 à 184. Il en résulte que les poches réceptrices de connexion 176 à 178 sont isolées des tubes 189, 191 et 193, et donc des poches émettrices de positionnement 145 à 147 du manipulateur. En conséquence, toute compression de l'une des poches émettrices de positionnement 145 à 147 du manipulateur entraîne un gonflement correspondant de la poche réceptrice de connexion correspondante 179 à 181. Cette augmentation de volume, de l'une des poches 179 à 181 provoque une diminution de volume de la poche émettrice de connexion correspondante 197 à 199, et donc la transmission de fluide hydraulique sous pression vers la poche réceptrice de positionnement correspondante 133 à 135 du rétroviseur gauche sur la figure 12, et la transmission de tout ordre de commande de positionnement au rétroviseur droit est impossible. Inversement, si l'utilisateur bascule le manipulateur 148 de la figure 12 sur la droite, il comprime la poche émettrice d'obturation 154, ce qui gonfle les poches réceptrices d'obturation 203 à 205, par transfert de fluide hydraulique sous pression par le tube 207. Le gonflement des poches 203 à 205 provoque la compression des poches d'isolement 185 à 187, et la diminution de leur volume à une valeur minimale empêchant toute communication entre les poches réceptrices de connexion 179 à 181 et les tubes 189, 191 et 193 de liaison aux trois poches émettrices de positionnement 145 à 147 du manipulateur. De ce fait, les poches réceptrices de connexion 179 à 181 sont isolées et ne peuvent changer de volume, de même, en conséquence, que les poches émettrice de connexion 197 à 199, de sorte qu'aucun ordre de commande de positionnement du rétroviseur droit ne peut lui être transmis. Par contre, toute compression des poches émettrices de positionnement 145 à 147 du manipulateur entraîne un gonflement des poches réceptrices de connexion correspondantes 176 à 178, et donc une diminution correspondante de volume des poches émettrices de connexion correspondante 194 à 196, ce qui transmet du fluide sous pression aux poches réceptrices de positionnement correspondantes 130 à 133, pour commander l'orientation du rétroviseur droit.

Afin de permettre l'accès aux différentes poches du connecteur qui correspondent à l'un des deux rétroviseurs, tout en conservant la protection assurée par le corps du connecteur 171 aux poches correspondant à l'autre rétroviseur, le couvercle 173 du connecteur est subdivisé en deux moitiés 173a et 173b, adjacentes le long de l'axe médian transversal du connecteur 171, qui est représenté par des pointillés sur le couvercle 173, chaque moitié de ce dernier portant l'un des deux crochets 175 d'encliquetage élastique sur l'embase 172.

La comparaison du connecteur de la figure 15 avec celui des figures 13 et 14 ainsi qu'avec le dispositif de commande de la figure 12 permet de constater que les poches d'isolement 136 à 141 et les poches réceptrices d'obturation 157 et 158 du dispositif de commande de la figure 12, qui sont installées juste en amont des poches réceptrices de positionnement correspondantes 130 à 132 et 133 à 135 des deux rétroviseurs et dans les carters ou boîtiers de protection de ces derniers, ont été remplacées par respectivement des poches d'isolement 182 à 187 et des poches réceptrices d'obturation 200 à 205 disposées dans le connecteur, respectivement juste en amont de poches réceptrices de connexion 176 à 181, qui correspondent aux poches 169 du connecteur de la figure 14, et pour les poches réceptrices d'obturation 200 à 205, juste à proximité des poches émettrices de connexion 194 à 199, qui correspondent aux poches 170 du connecteur de la figure 14.

En conséquence, le connecteur à commutation des voies de la figure 15 présente deux avantages

: il permet tout d'abord de diminuer la longueur des tubes reliant les poches émettrices d'obturation aux poches réceptrices d'obturation, et surtout il permet de diminuer l'encombrement de l'ensemble des poches directement nécessaire dans le boîtier ou carter de rétroviseur, ces poches se limitant aux poches réceptrices de positionnement ainsi qu'éventuellement une ou plusieurs poches d'embrayage ou de déblocage, comme cela est décrit ci-dessous en référence aux figures 16a à 18c.

Sur la figure 16a, on a représenté schématiquement et partiellement un rétroviseur extérieur de véhicule dont le positionnement est commandé par un dispositif hydraulique de commande à distance selon l'invention, ce rétroviseur étant du type de celui représenté sur la figure 4 de la demande de brevet européen N° 0152219, avec lequel il présente de nombreuses caractéristiques communes de structure, et on se reportera avantageusement à la description de cette demande de brevet européen pour plu s de détail sur le mode de fonctionnement, qui est presque identique à celui du rétroviseur de la figure 16a. Ce dernier comprend un carter 210, bombé pour offrir une moindre trainée aérodynamique et pour délimiter, du côté de sa concavité, un logement dans lequel un miroir 211 est fixé par sa face arrière sur une platine 212 qui est d'une part retenue par des organes d'articulation sur un support 213 fixé à l'intérieur du carter ou boîtier 210, et d'autre part déplacé par rapport à ce support 213 par trois récepteurs de positionnement tels que celui repérés dans son ensemble en 214. Ce récepteur comprend essentiellement une poche déformable réceptrice de positionnement 215, raccordée par le tube de liaison 216 directement ou indirectement (par l'intermédiaire d'un connecteur tel que décrit ci-dessus) à une poche émettrice de positionnement d'un manipulateur également tel que décrit ci-dessus. La poche réceptrice de positionnement 215 est disposée dans un cylindre 217 fixé sur le support 213 et présentant, du côté du miroir 211, un alésage de guidage axial de la partie de plus petit diamètre d'un piston étagé 218 dont la partie de plus grande diamètre est reçue dans le cylindre 217 et en appui sur la poche 215 qui prend elle-même appui contre le support 213, de sorte qui si le volume de la poche 215 augmente, en raison d'une compression de la poche émettrice de positionnement correspondante, le piston 218 est repoussé vers le miroir 211 et la platine 212, et il repousse lui-même ces deux éléments vers l'extérieur, ce qui modifie de manière correspondante l'orientation du miroir 211 par rapport au support 213 par l'effet des moyens d'articulation ces derniers comprennent d'une part une demi-rotule 219, logée dans une cuvette centrale et hémisphérique 220 de la platine 212, et montée autour d'une tige 221 qui passe dans un orifice au fond de la cuvette 220 et dans un orifice du support 213, et dont l'extrémité la plus proche du carter 210 est solidaire d'une coupelle radiale 222. Un ressort hélicoïdal de compression 223 entoure la portion de tige 221 s'étendant ent le support 213 et le carter 210, et ce ressort 223 prend appui d'un côté contre le support 213 et de l'autre contre la coupelle 222, de façon à solliciter axialement la tige 221 vers le carter 210, et donc la demi-rotule 219 contre la cuvette 220 de la platine 212, ce qui maintient cette dernière en appui contre le piston 218 et repousse ce dernier contre la poche 215. D'autre part, les moyens d'articulation comprennent deux portées de frottement en contact l'une contre l'autre pour maintenir le miroir 211 dans la position occupée après un déplacement par l'action des poches réceptrices telles que 215, l'une de ces deux portées de frottement étant une surface en forme de calotte sphérique convexe 224 présentée par la platine 212 en saillie vers le carter 210 et concentrique à la demi-rotule 219, tandis que l'autre portée de frottement est une surface en forme de calotte sphérique concave 225, présentée par le support 213 en saillie vers le miroir 211 et également concentrique à la demi-rotule 219. Dans un tel montage, il est clair que le ressort 223 a pour effet de maintenir les portées de frottement 224 et 225 en contact l'une contre l'autre, ce qui oppose une résistance importante aux efforts de commande des pivotements de la platine 212 par la cuvette 220 autour de la demi-rotule 219. Afin de supprimer ou, tout au moins, de diminuer dans une mesure importante cette résistance aux pivotements du miroir 211 et de sa platine 212 par rapport au support 213, le carter 210 présente, en regard de la coupelle 222 et de l'extrémité de la tige 221, un évidement circulaire 226 (voir figure 16b) ménagé dans un renflement 227 du carter 210, et une poche déformable réceptrice de déblocage 228, à paroi souple, est logée dans l'évidement 226 et reliée par un tube de liaison 228a à une poche déformable émettrice de déblocage, telle que, par exemple, la poche 112 du manipulateur de la figure 11a. De la sorte, une compression sur cette poche émettrice de déblocage entraîne une diminution de son volume, ce qui provoque directement ou indirectement (par l'intermédiaire éventuellement d'un connecteur) une augmentation du volume de la poche réceptrice de déblocage 228, ce qui a pour effet d'exercer sur la coupelle 222 et la tige 221 un effort antagoniste à celui du ressort 223, ceci tendant à relâcher tout contact entre, d'une part, la demi-rotule 219 et la cuvette 220, et, d'autre part, entre les deux portées de frottement 224 et 225.

Il en résulte que les pivotements de la cuvette 220 de la platine 212 autour de la demi-rotule 219 et sous l'effet des augmentations de volume des poches réceptrices de positionnement 215 sont facilités. Ce dispositif présente donc une très grande sensibilité aux ordres de commande. Après relâchement de la poche émettrice de déblocage, le ressort 223 comprime la poche réceptrice de déblocage 228 et assure à nouveau le contact frottant entre les portées 224 et 225, et de la demi-rotule 219 contre la cuvette 220, ce qui mobilise le miroir et sa platine dans la position qu'ils occupaient à cet instant. Dans ce dispositif, le tarage du ressort 223 permet d'obtenir un frottement plus ou moins important entre les portées 224 et 225, et également de supprimer tout risque de vibration du miroir 211 et de sa platine 212, tout en conservant une possibilité de réglage très souple, avec peu d'efforts sur les poches de positionnement telles que 215, lorsque le dispositif est débrayé par gonflement de la poche de déblocage 228.

Les figures 17a et 17b représente schématiquement et partiellement une variante du rétroviseur de la figure 7a qui s'en distingue essentiellement par la réalisation des organes du mécanisme de déblocage ou d'embrayage-débrayage. On retrouve dans cette variante un carter 230 de rétroviseur, dans lequel le miroir 231 est fixé sur une platine 232 retenue sur un support 233 interne au carter 230 par des moyens d'articulation à rotule, ainsi qu'une portée de frottement convexe 234 en forme de calotte sphérique en saillie sur la platine 232 du côté du carter 230, et coopérant avec une portée de frottement concave 235, également en forme de calotte sphérique, qui entoure la portée 234 et est supportée par le support 233 et en saillie vers la platine 232. Les caractéristiques particulières à cette variante sont que la portée concave 235 est formée sur la partie axialement externe de la face radialement interne d'une jupe 236 qui est, d'une part, périphérique au support 233 en forme d'embase agencée en disque circulaire, et d'autre part subdivisée en volets et segments cintrés et contigus séparés les uns des autres par des fentes radiales 237 ménagées dans la jupe et régulièrement répartis autour d'une gorge annulaire ménagée dans la périphérie de l'embase circulaire 233. Dans cette gorge est disposée la poche réceptrice de déblocage 238, qui est une poche déformable à volume variable et à paroi souple, en forme de boudin allongé et cintré dans la gorge de manière à former une poche torique selon une boucle presque complète, reliée à la poche déformable émettrice ou de commande de déblocage par le tube de liaison 238a à une extrémité du boudin (voir figure 17b). Lorsque la poche émettrice de déblocage est comprimée, la poche réceptrice de déblocage 538 est gonflée, ce qui provoque l'écartement radial des volets de la jupe 236 et des segments concaves 235 par rapport à la portée convexe 234, et à l'encontre du retour élastique de ces volets et segments de jupe en position initiale, du fait de la réalisation de la jupe en une matière synthétique appropriée. Ainsi, la portée convexe 234 est libérée de son contact sous pression contre les segments concaves 235, ce qui autorise son déplacement relatif avec la platine 232 et le miroir 231 par l'action des récepteurs de positionnement, non représentés, mais également montés dans ce rétroviseur entre l'embase 233 et la platine 232. Cette variante a pour avantage qu'elle ne comporte pas la tige 221, la coupelle 222 et le ressort 223 qui sont nécessaires dans l'exemple précédent.

Les figures 18a à 18c représentent une autre variante de rétroviseur à mécanisme de déblocage ou d'embrayage-débrayage facilitant l'action des récepteurs de positionnement et ne comportant que deux pièces relativement rigides en plus du récepteur de déblocage. Dans cette variante, on retrouve un carter 240 dans lequel le miroir 241 est fixé sur une platine 242 à partie centrale surépaissie et de révolution 243, dont la base 244 tournée vers le carter 240 présente un bossage central et hémisphérique 245, en saillie vers le carter 240, et engagé en rotule dans un évidement en forme de calotte sphérique ménagée dans un bossage ou au renflement 245 présenté en saillie sur le fond du carter 240. La surface latérale de la partie centrale 243 de la platine 242 forme un portée de frottement en calotte sphérique convexe 247 de même centre que le bossage hémisphérique 245, et qui coopère avec une portée de frottement concave, entourant de manière discontinue la portée convexe 247, et délimitée sur les faces interne et concave, en portions de calotte sphérique de doigts 248 régulièrement répartis autour de la portée 247 et chacun solidaire du carter 240 par son pied aminci 249 qui délimite, du côté tourné vers la portée convexe 247, un évidement en arc de cercle dans la direction circonférentielle autour de la partie centrale 243 de la platine 242. Dans chacun de ces évidements est logé l'un des boudins cylindriques et gonflables 250 d'un chapelet de boudins raccordés en série par de petits canaux 251 de faible volume interne, comme représenté sur la figure 18c, et qui forment la poche déformable réceptrice de déblocage de ce dispositif. Le gonflement de ces boudins 250 par la compression d'une poche émettrice ou de commande de déblocage correspondante provoque un écartement radial des doigts 248 à l'encontre de leur rappel élastique, qui assure la coopération avec la portée convexe 247 et maintient la demi-rotule 245 contre le fond de l'évidement du renflement 246. L'écartement radial des doigts 248 libère la portée convexe 247 de son appui contre les portions de portées concaves à l'intérieur des doigts 248, ce qui facilite les pivotements du miroir 241 et de sa platine 242 par rapport au carter 240, par l'action des récepteurs de positionnement logés par exemple contre les doigts 248 et la périphérie du carter 240.

Dans cet exemple, le centre 0 du bossage hémisphérique 245 de petit rayon est le centre de rotation du miroir 241 et de sa platine 242, ainsi que le centre de la surface convexe 247 de grand rayon et de l'enveloppe des portions de surface concave sur les faces internes des quatre ou six doigts 248, dont la course radiale, bien que faible lors du gonflage des poches 250, est suffisante pour rendre la partie centrale 243 mobile par pivotement entre les doigts 248.

**Revendications**

1. Dispositif de commande hydraulique à distance d'au moins un organe commandé (211) mobile sur un support (213, 210), ledit dispositif comprenant :
   - un organe de commande à actionnement manuel et
   - au moins deux, mais de préférence trois, circuits hydrauliques de positionnement comportant chacun
   - un émetteur (9) de positionnement, qui est un émetteur de pression de fluide, à poche déformable à paroi souple et contenant un fluide hydraulique,
   - au moins un récepteur (214) de positionnement qui est un récepteur de pression de fluide à chambre (215) à volume variable, et
   - au moins une canalisation (9a, 216) de raccordement de l'émetteur au récepteur, et tels que la poche à paroi souple (9) de l'émetteur d'au moins un circuit hydraulique est mécaniquement déformée par l'actionnement manuel de l'organe de commande, de sorte que du fluide qu'elle contient est transféré à l'un au moins des récepteurs (214) qui lui sont reliés, et les récepteurs 214 reliant mécaniquement l'organe commandé (211) à son support (213, 210), afin de modifier la position de l'organe commandé par rapport au support en réponse au manoeuvre de l'organe de commande, caractérisé en ce que la poche (9) à paroi souple de chaque émetteur est directement montée dans l'organe de commande à actionnement manuel.

2. Dispositif selon la revendication 1, caractérisé en ce que l'organe de commande à actionnement manuel est un bouton-manipulateur à contact direct comprenant une enveloppe rigide (1, 2, 4) délimitant d'une part un logement interne pour chacune des poches (9) à paroi souple et, d'autre part, au moins une ouverture (8) directement en regard d'au moins une portion de la paroi souple de chaque poche déformable (9), afin de permettre la déformation de chaque poche (9) par appui direct de l'utilisateur sur sa paroi souple.

3. Dispositif selon la revendication 2, caractérisé en ce que l'enveloppe rigide comprend un carter (1) sensiblement cylindrique, fermé au moins partiellement d'un côté par un couvercle (2) et entourant au moins partiellement un corps interne (3) qui délimite avec le carter (1) et/ou le couvercle (2) au moins deux, mais de préférence trois alvéoles de préférence répartis régulièrement sur la périphérie interne, et dont chacun loge l'une des poches (9) à paroi souple, de manière à l'isoler des autres poches, les ouvertures (8) d'appui direct sur les poches (9) étant ménagées dans le carter (1) et/ou dans le couvercle (2)

4. Dispositif selon la revendication 3, caractérisé en ce que le carter (1) est fermé, du côté opposé au couvercle (2), par un fond (4) percé de trous de passage des canalisations de raccordement (9a) aux poches (9) déformables et qui supporte le corps interne (3) présentant des bras (7) en saillie et en nombre égal aux poches (9) lesdits bras délimitant deux-à-deux les alvéoles de logement des poches (9) ainsi isolées l'une de l'autre par lesdits bras (7) du corps interne (3).

5. Dispositif selon la revendication 4, caractérisé en ce que le corps interne (43), le couvercle (42) sans ouverture et le carter (41) dont la surface latérale présente toutes les ouvertures (48) d'appui sur les poches déformables (49), sont montés mobiles d'une seule pièce vis-à-vis d'un support (46), entre deux positions extrêmes dont l'une est une position escamotée, dans laquelle le carter (41) est bloqué par un mécanisme de verrouillage (46b) sur le support (46), de sorte que seul le couvercle (42) soit en saillie à l'extérieur du support (46), et dont l'autre est une position de service dans laquelle le carter (41) est au moins partiellement en saillie à l'extérieur du support (46) de sorte que les ouvertures d'appui (48) sur les poches (49) sont librement accessibles à l'utilisateur.

6. Dispositif selon la revendication 2 destiné à la commande d'un organe de sécurité, caractérisé en ce que l'enveloppe rigide (31) est en forme de cuvette à fond fermé dans laquelle les poches déformables (39) sont retenues et logées autour d'une tige centrale (33, 35) solidaire de la cuvette(31) et la reliant à une embase (34) de fixation du manipulateur sur un support (36), l'embase (34) étant espacée et en regard d'au moins une ouverture de la cuvette offrant un accès aux poches déformables (39) reliées aux canalisations (38) de raccordement qui passent dans la tige centrale (33, 35).

7. Dispositif selon la revendication 1, caractérisé en ce que l'organe de commande à actionnement manuel est un manipulateur linéaire comprenant plusieurs boutons-poussoirs (50) disposés côte-à-côte et comportant chacun un poussoir (51) monté pivotant autour d'un axe de basculement (56) sur une embase (57) de fixation du bouton-poussoir (50) à un support, au moins une poche déformable (59) étant interposée entre chaque poussoir (51) basculant et l'embase (57).

8. Dispositif selon la revendication 7, caractérisé en ce que le manipulateur linéaire comprend au moins trois boutons-poussoirs (50) côte-à-côte, dont les poussoirs (51) pivotent, à proximité de l'une de leurs extrémités (55) et d'un même côté du manipulateur, autour d'un axe de basculement (56) commun et porté par une embase commune (57), percée d'orifices de passage des canalisations (59a) de raccordement dont chacune est reliée à l'unique poche déformable (59) logée entre chaque poussoir (51) et l'embase commune (57).

9. Dispositif selon la revendication 7, caractérisé en ce que le manipulateur linéaire comprend au moins deux boutons-poussoirs (60) côte-à-côte, dont les poussoirs (61) pivotent chacun, dans sa partie médiane, autour d'un axe de basculement (66) commun et porté par une embase commune (67) percée, en regard de chaque poussoir (61), de deux orifices de passage des canalisations (69a) reliées aux deux poches déformables (69) logées entre chaque poussoir (61) et l'embase commune (67) et de part et d'autre de l'axe de basculement (66).

10. Dispositif selon la revendication 1, caractérisé en ce que l'organe de commande à actionnement manuel est un manipulateur oscillant (70) comprenant un corps tubulaire (73) de fixation du manipulateur à un support (76), et un poussoir oscillant (71) guidé par rotulage (72, 75) dans le corps tubulaire (73) et engagé dans ce dernier par une partie formant une came (72) de déformation d'au moins trois poches déformables (79) réparties, de préférence de manière régulière, à l'intérieur du corps tubulaire (73), le poussoir oscillant (71) comportant également une plaque de poussée (77) externe au corps tubulaire (73) et sur laquelle toute poussée excentrée provoque un déplacement relatif du corps tubulaire (73) et du poussoir (71) comprimant au moins une poche déformable (79).

11. Dispositif selon la revendication 10 caractérisé en ce que la partie du poussoir (71) formant came est une tête rotulée (72) sur un fond (74, 75) du corps tubulaire (73) et rattachée à la plaque de poussée (77) par une portion amincie (78) délimitant avec le corps tubulaire (73) au moins un évidement de logement des poches (79) qui sont réparties autour de la tête (72).

12. Dispositif selon la revendication 11, caractérisé en ce que la tête (72) du poussoir oscillant (71) est extérieurement conformée en came à au moins trois lobes (72a) de compression des poches déformables (79).

13. Dispositif selon la revendication 10, caractérisé en ce que la partie du poussoir (81) formant came est une jupe (82) dont la face externe est au moins partiellement conformée en calotte sphérique convexe montée en rotule dans une portée en calotte sphérique concave à l'intérieur du corps tubulaire (83), et la face interne de la jupe (82) délimitant avec un plot (85) engagé dans la jupe (82) et solidaire du corps tubulaire (83), au moins un évidement de logement des poches déformables (89) réparties autour du plot (85) et à l'intérieur de la jupe (82).

14. Dispositif selon la revendication 1, caractérisé en ce que l'organe de commande à actionnement manuel est un manipulateur à poussoir (97) monté flottant sur une embase (91) de fixation du manipulateur à un support et présentant au moins trois empreintes de logement des poches déformables (94, 95, 93), en regard desquelles le poussoir (97) présente des cames (100, 101, 102) de compression des poches par appui sur le poussoir.

15. Dispositif selon la revendication 14, caractérisé en ce qu'au moins deux poches (94, 95) se recouvrent partiellement (94a, 95a) au droit d'une came (102) du poussoir (97) dont la course d'approche vis-à-vis des poches est plus faible, au déplacement du poussoir (97) vers l'embase (91), que les courses d'approche de cames (100, 101) en regard des parties non recouvertes des deux poches (94, 95) qui se recouvrent partiellement.

16. Dispositif selon la revendication 15, caractérisé en ce que l'embase présente une empreinte supplémentaire et centrale logeant une poche déformable supplémentaire (112) et centrale, autour de laquelle sont réparties les autres poches déformables (113, 114, 115), et avec lesquelles la poche centrale (112) ne présente aucun recouvrement et le poussoir (11 7) présente une came centrale (118) en regard de la poche centrale (112) et à portée sphérique afin de permettre la compression simultanée de la poche centrale (112) et d'au moins une autre poche (113, 114, 115), la cours d'approche de la came centrale (118) vis-à-vis de la poche centrale (112) étant la plus faible des courses d'approche des différentes cames du poussoir (117) et la course totale de la came centrale (118)étant telle que lorsqu'elle est accomplie et qu'au moins deux poches (114, 115) présentent une zone de recouvrement, une came (122) en regard de la zone de recouvrement affleure les parties recouvertes des deux poches (114, 115).

17. Dispositif selon l'une des revendications 1 à 16, caractérisé en ce que l'organe de commande à actionnement manuel est un manipulateur (148) à commutation de voies, permettant de commander sélectivement l'un ou l'autre de deux organes commandés dont la position de chacun est déterminée par au moins deux, mais de préférence trois récepteurs de positionnement à pression de fluide et à poche réceptrice déformable (130 à 132, 133 à 135), le manipulateur comprenant, d'une part, un corps (149) logeant un nombre correspondant d'émetteurs de positionnement à pression de fluide et à poche émettrice déformable (145, 146, 147), et dont chacun est relié en parallèle par des canalisations de raccordement (142, 143, 144), à deux récepteurs de positionnement associés chacun à l'un des deux organes commandés, et d'autre part, deux émetteurs d'obturation à pression de fluide et à poches émettrices d'obturation déformables (153, 154), dont chacun est reliée par une canalisation de raccordement (155, 156) à un récepteur d'obturation à pression de fluide et à poche réceptrice déformable (157, 158) qui est maintenue par des moyens mécaniques en configuration de transmission de pression àvec chacune des poches déformables d'isolement (136 à 138, 139 à 141), en nombre égal au nombre des poches réceptrices de positionnement, et dont chacune est située en amont de l'une desdites poches réceptrices déformables de positionnement (130 à 132 et 133 à 135) associées à l'un des organes commandés, de sorte que la compression d'une poche émettrice d'obturation (153, 154) transfère du fluide vers la poche réceptrice d'obturation (157, 158) qui lui est raccordée et qui est mise sous pression et augmente de volume de façon à comprimer simultanément les poches d'isolement (136 à 138, 139 à 141) en amont des poches réceptrices de positionnement (130 à 132 et 133 à 135) de l'organe commandé correspondant afin de couper la communication entre ces poches réceptrices de positionnement et les poches émettrices de positionnement (145, 146, 147) du manipulateur (148) qui restent en communication avec les poches réceptrices de positionnement associées à l'autre organe commandé.

18. Dispositif selon la revendication 17, caractérisé en ce que le corps (149) du manipulateur (148) est solidaire d'une embase (152) montée pivotante sur un support autour d'un axe (0, 0') de pivot de part et d'autre duquel l'embase (152) présente deux évidements logeant chacun au moins partiellement l'une des deux poches émettrices d'obturation (153, 154) qui sont retenues sur le support, de sorte que tout pivotement du manipulateur (148) sur le support, d'un côté ou de l'autre de l'axe (0, 0') provoque la compression de l'une des poches émettrices d'obturation.

19. Dispositif selon l'une des revendications 1 à 18, dans lequel chacun des circuits hydrauliques comprend au moins un connecteur démontable comportant une poche déformable réceptrice de connexion (169) reliée par une canalisation de raccordement (169a) à la poche déformable de l'émetteur correspondant, une poche déformable émettrice de connexion (170) reliée par une canalisation de raccordement (170a) à la poche déformable du récepteur correspondant, et une enveloppe (161, 162) logeant les poches émettrice et réceptrice de connexion en les maintenant en butée l'une contre l'autre afin que la pression s'exerçant sur la poche réceptrice de connexion (169) soit transmise à la poche émettrice de connexion (170), caractérisé en ce que les enveloppes des connecteurs démontables sont constituées par un unique corps de connecteur (160) à deux volets (161, 162) se rabattant et se fixant l'un contre l'autre de manière amovible (168) et dont chacun présente un nombre égal d'au moins trois empreintes venant chacune en regard d'une empreinte de l'autre volet lorsque les deux volets (161, 162) sont rabattus et fixés l'un contre l'autre, et les trois poches émettrices de connexion (170) étant disposées chacune dans l'une des trois empreintes d'un volet (162) qui viennent en regard des trois empreintes de l'autre volet (161) dans chacune desquelles est disposée l'une des trois poches réceptrices de connexion (169).

20. Dispositif selon la revendication 19, caractérisé en ce que le corps de connecteur (160) est moulé d'une seule pièce en une matière plastique et ses deux volets à empreinte (161, 162) sont reliés l'un à l'autre par au moins une charnière souple (163) et se fixent de manière amovible l'un contre l'autre par encliquetage élastique (168).

21. Dispositif selon l'une des revendications 19 et 20, et comprenant un manipulateur à commutation de voies (148) selon l'une des revendications 17 et 18, caractérisé en ce que l'un des deux volets (172, 173) du corps de connecteur (171) présente deux ensembles d'empreintes comprenant chacun:

au moins trois empreintes dans lesquelles se logent trois poches réceptrices de connexion (176 à 178, 179 à 181), pour la transmission de toute pression de commande à l'un des deux organes commandés, et

au moins trois empreintes dans lesquelles se logent trois poches déformables d'isolement (182 à 184, 185 à 187), en communication chacune respectivement avec l'une des trois poches réceptrices de connexion de l'ensemble correspondant,

les poches réceptrices de connexion (176 à 181) des deux ensembles étant raccordées en trois paires indépendantes (176-181, 177-180, 178-179) comportant chacune une poche réceptrice de connexion d'un ensemble en communication avec une poche réceptrice de connexion de l'autre ensemble par l'intermédiaire de leurs poches d'isolement (182 à 187) qui sont raccordées l'une à l'autre par une canalisation de couplage (188, 190, 192) dans laquelle débouche une canalisation de raccordement (189, 191, 193) à l'une des trois poches émettrices de positionnement (145 à 147) du manipulateur à commutation de voies (148), et l'autre volet (173) du corps de connecteur présente également deux ensembles d'empreintes comprenant chacun :

au moins trois empreintes dans lesquelles se logent trois poches émettrices de connexion (194 à 196 et 197 à 199), pour la transmission de toute pression de commande à l'un des deux organes commandés, et dans chacune est raccordée par une canalisation de raccordement (194a à 199a) à l'une respectivement des trois poches réceptrices de positionnement (130 à 132 et 133 à 135) de l'organe commandé correspondant, et

au moins une empreinte dans laquelle se loge au moins une poche déformable réceptrice d'obturation (200-201-202, 203-204-205), reliée par une canalisation de transmission (206, 207) à l'une des deux poches émettrices d'obturation (153, 154) du manipulateur à commutation de voies (148),

de sorte que, lorsque les deux volets (172, 173) sont rabattus et fixés l'un contre l'autre, chacune des trois poches réceptrices de connexion (176 à 178, 179 à 181) correspondant à un organe commandé est en position de transmission de pression avec l'une respectivement des trois poches émettrice de connexion (194 à 196, 197 à 199) correspondant au même organe commandé, et la ou les poches réceptrices d'obturation (200 à 202, 203 à 205) associée(s) aux trois poches émettrices de connexion correspondant à ce même organe commandé est ou sont en position de transmission de pression avec les trois poches d'isolement (182 à 184, 185 à 187) en communication avec les trois poches réceptrices de connexion correspondant au même organe commandé.

22. Dispositif selon la revendication 21, caractérise en ce que l'un au moins des deux volets (172, 173) du corps de connecteur (171) est en deux parties amovibles (173a, 173b) indépendamment l'une de l'autre, par rapport à l'autre volet (172) et présentant chacune l'un des deux ensembles d'empreintes du volet (173) correspondant.

23. Dispositif selon l'une des revendications 1 à 22, du type dans lequel au moins un organe commandé (211) est retenu sur son support (213, 210) par des moyens d'articulation à rotule (219, 220, 224, 225) autorisant, d'une part, le blocage de l'organe commandé (221) en position par rapport à son support (213, 210) par frottement l'une contre l'autre d'au moins deux portées (224, 225) en forme de calottes sphériques de courbures complémentaires et de même centre desdits moyens d'articulation, et qui sont appliquées l'une contre l'autre par une pression de blocage, et, d'autre part, le changement de l'orientation de l'organe commandé (211) par rapport à son support (213, 210) sous l'effet de l'augmentation de volume de l'une au moins des chambres à volume variable (215) des récepteurs de positionnement (214) interposés entre ledit organe commandé (211) et son support (213, 210), caractérisé en ce qu'il comprend au moins un circuit hydraulique supplémentaire comportant un émetteur de déblocage à chambre à volume variable et à portée de l'utilisateur et relié par une canalisation de raccordement (228a) à au moins un récepteur de déblocage à chambre à volume variable (228), qui est monté sur le support (213, 210) de manière à développer une pression antagoniste à la pression de blocage afin d'écarter l'une de l'autre lesdites portées de frottement (224, 225) par augmentation du volume de ladite chambre à volume variable (228) du récepteur de déblocage en conséquence d'une diminution du volume de ladite chambre à volume variable de l'émetteur de déblocage.

24. Dispositif selon la revendication 23, caractérisé en ce que lesdites chambres à volume variable desdits émetteur et récepteur de déblocage comprennent chacune au moins une poche déformable à paroi souple (228) qui est montée directement dans l'organe de commande à actionnement manuel pour l'émetteur de déblocage, et retenue dans au moins une empreinte ménagée dans le support (210) correspondant pour le récepteur de déblocage, la pression de blocage étant exercée élastiquement (223) sur les portées de frottement (224, 225).

25. Dispositif selon l'une des revendications 23 et 24, du type dans lequel lesdits moyens d'articulation à rotule comprennent une demi-rotule (219) qui est d'une part, engagée dans un logement hémisphérique (220) d'une platine (212) liée à l'organe commandé (211) et, d'autre part, solidaire d'un organe de liaison (221) au support (213, 210), ledit organe de liaison traversant le fond du logement (220) et étant sollicité par un organe élastique (223) prenant appui d'un côté sur le support (213) et de l'autre sur l'organe de liaison (221) afin d'exercer ladite pression de blocage, caractérisé en ce que ladite chambre à volume variable du récepteur de déblocage est une poche déformable (228) disposée dans une empreinte ménagée dans le support (210), de manière à exercer sur ledit organe de liaison (221) une action antagoniste à celle dudit moyen élastique (223) lorsque la poche déformable du récepteur de déblocage (228) est gonflée par une diminution du volume de la chambre à volume variable de l'émetteur de déblocage.

26. Dispositif selon l'une des revendications 23 et 24, du type dans lequel lesdites portées de frottement en forme de calottes sphériques (234, 235) desdits moyens d'articulation à rotule comprennent une portée convexe (234) présentée par une platine (232) liée à l'organe commandé (231), et coopérant avec une portée concave (235) entourant la portée convexe et supportée par une embase (233) solidaire du support (230), caractérisé en ce que la portée concave (235) est formée sur une jupe périphérique (236) subdivisée en volet contigu par des fentes radiales (237) ménagées dans la jupe (236) qui entoure une gorge annulaire de l'embase et contenant la chambre à volume variable du récepteur de déblocage qui est constituée d'une poche déformable (238) à paroi souple et de forme sensiblement torique, de sorte que le gonflement de ladite poche sensiblement torique, en réponse à un ordre de déblocage provenant de l'émetteur de déblocage, commande l'écartement radial des volets de la jupe (236) par rapport à la portée convexe (234) et à l'encontre de leur retour élastique, propre au matériau constitutif de la jupe, afin de libérer au moins partiellement la portée convexe (234) de son blocage en position par la portée concave (235) de la jupe et de permettre son déplacement relatif sous l'action des récepteurs de positionnement.

27. Dispositif selon l'une des revendications 23 et 24, du type dans lequel lesdites portées de frottement en forme de calottes sphériques (248, 247) desdits moyens d'articulation à rotule comprennent une portée convexe (247) présentée par une platine (243) liée à l'organe commandé (241) et coopérant avec une portée concave qui l'entoure et est présentée par le support (240), caractérisé en ce que la portée convexe (247) est aménagée sur la surface latérale externe de ladite platine (243) dont le fond (244), du côté opposé à l'organe commandé (241), présente un bossage hémisphérique (245) en saillie vers le support (240), de rayon inférieur à celui de la portée convexe (247), et formant une demi-rotule concentrique à cette portée convexe et engagée dans une cuvette (246) du support (240), ladite demi-rotule étant maintenue en position de rotation dans la cuvette par la compression exercée sur la portée convexe (247) par une pluralité de doigts (248) solidaires chacun du support (240) et entourant ladite portée convexe (247) de manière à définir chacun une portion de la portée concave qui est discontinue, et chaque doigt (248) délimitant, au niveau de sa partie (249) de liaison au support (240), et du côté tourné vers la platine (243), un évidement s'étendant en direction circonférentielle et dans lequel est logée l'une au moins des poches gonflables (250) en forme de boudin d'un chapelet de boudins reliés en série par des conduits de faible volume interne (251), et qui forment la chambre à volume variable du récepteur de déblocage, de sorte que le gonflement des boudins, en réponse à un ordre de déblocage provenant de l'émetteur correspondant, provoque un écartement radial des doigts (248) à l'encontre de leur rappel élastique naturel, pour libérer la portée convexe (247) et autoriser une rotation de la platine (243) par sa demi-rotule (245) sur le support (240), sous l'action des récepteurs de positionnement.

## Claims

1. Means for the remote hydraulic control of at least one controlled member (211) which can move on a support (213, 210), the said means comprising:
   - a manually operated control member and
   - at least two, but preferably three, hydraulic positioning circuits each including
   - a position transmitter (9), which is a fluid pressure transmitter having a deformable flexible-wall pocket containing a hydraulic fluid,
   - at least one positioning receiver (214) which is a variable volume fluid chamber (215) pressure receiver, and
   - at least one conduit (9a, 216) connecting the transmitter to the receiver, and such that the flexible-wall pocket (9) of the transmitter at least one hydraulic circuit is mechanically deformed by manual operation of the control in such a way that the fluid which it contains is transferred to at least one of the receivers (214) connected to it, and receivers (214) mechanically connecting the controlled member (211) to its support (213, 210) in order to alter the position of the controlled member with respect to the support in response to operation of the control member,

   characterised in that the flexible-wall pocket (9) of each transmitter is directly mounted in the manually operated control member.

2. Means according to claim 1, characterised in that the manually operated control member is a direct contact control adjuster including a rigid envelope (1, 2, 4) bounding on the one hand an internal housing for each of the flexible-wall pockets (9) and on the other hand at least one opening (8) directly opposite at least one portion of the flexible wall of each deformable pocket (9) so that each pocket (9) can be deformed by direct pressure onto the flexible wall from the user.

3. Means according to claim 2, characterised in that the rigid envelope comprises a substantially cylindrical enclosure (1) at least partly closed on one side by a cover (2) and at least partly enclosing an inner body (3) which with the enclosure (1) and/or cover (2) bounds at least two, but preferably three, spaces which are preferably distributed regularly about the internal perimeter, each of which houses one of the flexible-wall pockets (9) in such a way as to isolate it from the other pockets, the openings (8) for direct pressure on the pockets (9) being made in the enclosure (1) and/or in the cover (2).

4. Means according to claim 3, characterised in that the enclosure (1) is closed on the side opposite the cover (2) by an end (4) which is pierced with holes for passage of the connecting conduits (9a) to the deformable pockets (9) and which supports the internal body (3) which has projecting arms (7) in a number equal to the pockets (9), the said arms bounding in pairs the spaces for housing the pockets (9), which are thus isolated from each other by the said arms (7) of the inner body (3).

5. Means according to claim 4, characterised in that the inner body (43), the cover (42) without an opening and the enclosure (41), whose lateral surface has all the openings (48) for pressure on the deformable pockets (49), are mounted in such a way as to move as a single piece with respect to a support (46) between two extreme positions of which one is a retracted position in which the enclosure (41) is immobilised on the support (46) by a locking mechanism (46b) in such a way that only the cover (42) projects outside the support (46), and of which the other is a service position in which the enclosure (41) projects at least partly beyond the support (46) in such a way that the openings (48) for pressing the pockets (49) are freely accessible to the user.

6. Means according to claim 2, intended for the control of a safety device, characterised in that the rigid enclosure (31) is in the shape of a bowl with an enclosed base in which the deformable pockets (39) are held and housed around a central rod (33, 35) which is integral with the bowl (31) connecting it to a base (34) for attaching the adjuster to a support (36), the base (34) being spaced out and opposite at least one opening in the bowl offering access to the deformable pockets (39) connected to the connecting conduits (38) which pass through the central rod (33, 35).

7. Means according to claim 1, characterised in that the manually operated control member is a linear adjuster comprising several push-buttons (50) arranged side by side each having a push-button (51) pivotally mounted about a rocking axis (59) on a base (57) attaching the push-button (50) to a support, at least one deformable pocket (59) being placed between each rocking push-button (51) and the base (57).

8. Means according to claim 7, characterised in that the linear adjuster includes at least three push-buttons (50) side by side, in which the push-buttons (51) pivot close to one of their ends (55) and on the same side of the adjuster about a common rocking axis (56) supported by a common (57) pierced by openings for the passage of the connecting conduits (59a), each of which is connected to the single deformable pocket (59) located between each push-button (51) and the common base (57).

9. Means according to claim 7, characterised in that the linear adjuster comprises at least two side-by-side push-buttons (60), in which each push-button (61) pivots in its median portion about a common rocking axis (66) supported by a common base (67) pierced opposite each push-button (61) by two openings for the passage of conduits (69a) connected to two deformable pockets (69) located between each push-button (61) and the common base (67) on either side of the rocking axis (66).

10. Means according to claim 1, characterised in that the manually operated control member is an oscillating adjuster (70) comprising a tubular body (73) attaching the adjuster to a support (76) and a rocking push-button (71) guided by a universal joint (72, 75) within the tubular body (73) and engaged therein by a part forming a cam (72) which deforms at least three deformable pockets (79) distributed in a preferably regular manner within the tubular body (73), the rocking push-button (71) also including a pressure plate (77) outside the tubular body (73) on which any eccentric pressure causes relative displacement of the tubular body (73) and the push-button (71) compressing at least one deformable pocket (79).

11. Means according to claim 10, characterised in that the part of the push-button (71) forming the cam is a head (72) coupled by a universal joint to a base (74, 76) of the tubular body (73) and attached to the pressure plate (77) by a thin portion (78) which with the tubular body (73) bounds at least one cavity in the housing for the pockets (79) which are distributed around the head (72).

12. Means according to claim 11, characterised in that the exterior of the head (72) of the rocking push-button (71) is in the form of a cam having at least three lobes (72a) for compressing the deformable pockets (79).

13. Means according to claim 10, characterised in that the part of the push-button (81) forming a cam is a skirt (82) whose outer face is at least partly formed as a convex spherical cup pivotally mounted in a concave spherical cup mounting within the tubular body (83) and the inner side of the skirt (82) bounding with the pad (85) engaged with the skirt (82) and integral with the tubular body (83) at least one cavity for housing the deformable pockets (89) distributed around the pad (85) within the skirt (82).

14. Means according to claim 1, characterised in that the manually operated control member is a push-button adjuster (97) floatingly mounted on a base (91) attaching the adjuster to a support and having at least three cavities housing deformable pockets (94, 95, 93), opposite which the push-button (97) has cams (100, 101, 102) for compressing the pockets by pressure on the push-button.

15. Means according to claim 14, characterised in that at least two pockets (94, 95) partly overlap (94a, 95a) alongside a cam (102) of the push-button (97) whose approach travel with respect to the pockets is smaller, when the push-button (97) is displaced towards base (91) than the approach travel of the cams (100, 101) opposite the uncovered parts of the two pockets (94, 95) which partly overlap.

16. Means according to claim 15, characterised in that the base has a supplementary central cavity housing a supplementary central deformable pocket (112) around which the other deformable pockets (113, 114, 115) are distributed, and with which the central pocket (112) has no overlap and the push-button (117) has a central cam (118) opposite the central pocket (112) with a spherical span so that it can simultaneously compress the central pocket (112) and at least one other pocket (113, 114, 115), the approach travel of the central cam (118) with respect to the central pocket (112) being smaller than the approach travel of the various cams of the push-button (117) and the overall travel of the central cam (118) being such that when the approach is completed and at least two pockets (114, 115) have an overlapping zone a cam (122) opposite the overlap zone makes the overlapped portions of the two pockets (114, 115) flush.

17. Means according to any of claims 1 to 16, characterised in that the manually operated control member is a track switching adjuster (148) whereby one or other of two controlled members can be collectively controlled, the position of each being determined by at least two, but preferably three, fluid pressure deformable-receiver-pocket receivers (130 to 132, 133 to 135), the adjuster comprising on the one hand a body (149) housing a corresponding number of fluid pressure and deformable-transmitter-pocket positioning transmitter (145, 146, 147) each of which is connected in parallel by means of connecting conduits (142, 143, 144) to two positioning receivers each associated with one of the two controlled members, and on the other hand two fluid pressure deformable obstructing-transmitter-pocket obstructing transmitters (153, 154) each of which is connected by a connecting conduit (155, 156) to a fluid pressure deformable-receiver-pocket obstructing receiver (157, 158) which is held by mechanical means in a configuration for the transmission of pressure to each of the isolating deformable pockets (136 to 138, 139 to 141) in a number equal to the number of positioning receiver pockets, each of which is located upstream of one of the said deformable positioning receiver pockets (130 to 132 and 133 to 135) associated with one of the controlled members in such a way that compression of one obstructing transmitter pocket (153,154) transfers fluid towards the obstructing receiver pocket (157, 158) connected to it which is pressurised and increases in volume in such a way as to simultaneously compress the isolating pockets (136 to 138, 139 to 141) upstream of the positioning receiver pockets (130 to 132 and 133 to 135) of the corresponding controlled member in order to cut communication between these positioning receiver pockets and the positioning transmitter pockets (145, 146, 147) of the adjuster (148) which remain in communication with the positioning receiver pockets associated with the other controlled member.

18. Means according to claim 17, characterised in that the body (149) of the adjuster (148) is integral with a base (152) pivotally mounted on a support about a pivot axis (0, 0') on either side of which the base (152) has two cavities each at least partly housing one of the two obstruction transmitter pockets (153, 154) which are held on the support in such a way that any pivoting of the adjuster (148) on the support on one or other side of the axis (0, 0') causes compression of one of the obstruction transmitter pockets.

19. Means according to any of claims 1 to 18, in which each of the hydraulic circuits includes at least one demountable connector including a deformable connecting receiver pocket (169) connected by a connecting conduit (169a) to the deformable pocket of the corresponding transmitter, a deformable connection transmitter pocket (170) connected by the connecting conduit (170a) to the deformable pocket of the corresponding receiver and an envelope (161, 162) housing the connection transmitter and receiver pockets holding them abutted against each other so that the pressure exerted on the connection receiver pocket (169) is transmitted to the connection transmitter pocket (170), characterised in that the envelopes of the demountable connectors comprise a single connector body (160) in two parts (161, 162) which fold against and are attached to each other in a movable way (168), each of which has an equal number of at least three cavities opposite a cavity in the other half when the two halves (161, 162) are folded against and attached to each other, and the three connection emitter pockets (170) being each placed in one of the three cavities in one half (162) opposite the three cavities in the other half (161), in each of which is located one of the three connection receiver pockets (169).

20. Means according to claim 19, characterised in that the connector body (160) is moulded in single piece from plastics material and the two cavity-bearing halves (161, 162) are connected to each other by at least one flexible hinge (163) and are attached to each other in a removable way by an elastic snap connection (168).

21. Means according to any of claims 19 and 20, and comprising a track switching adjuster (148) according to either of claims (17 and 18) characterised in that one of the two halves (172, 173) of the connector body (171) has two sets of cavities each comprising:

at least three cavities in which are housed three connection receiver pockets (176 to 178, 179 to 181), for the transmission of any control pressure to one of the two controlled members, and

at least three cavities within which are housed three deformable isolating pockets (182 to 184, 185 to 187), each in communication respectively with one of the three connection receiver pockets of the corresponding assembly, the connection receiver pockets (176 to 181) of the two assemblies being connected in three independent pairs (176-181, 177-180, 178-179) each comprising a connection receiver pocket of a communication assembly with a connection receiver pocket of the other assembly through the intermediary of their isolating pockets (182 to 187) which are connected together by means of a coupling conduit (188, 190, 192) into which opens a conduit (189, 191, 193) providing a connection to one of the three positioning transmitter pockets (145 to 147) of the track switching adjuster (148), and the other half (173) of the connector body also has two sets of cavities each comprising:

at least three cavities in which are housed three connection transmitter pockets (194 to 196 and 197 to 199) for transmission of any control pressure to one of the two controlled members, and in which each is connected by means of a connection conduit (194a to 199a) to one respectively of the three positioning receiver pockets (130 to 132 and 133 to 135) of the corresponding controlled member, and

at least one cavity in which is housed at least one deformable obstruction receiver pocket (200-201-202, 203-204-205), connected by a transmission conduit (206, 207) to one of the two obstructing transmitter pockets (153, 154) of the track switching adjuster (148), in such a way that when the two halves (172, 173) are folded against and attached to each other each of the three connection receiver pockets (176 to 178, 179 to 181) corresponding to a controlled member is in a position to transmit pressure to one respectively of the three connection transmitter pockets (194 to 196, 197 to 199) corresponding to the same controlled member, and the obstruction receiver pocket or pockets (200 to 202, 203 to 205) associated with the three connection transmitter pockets corresponding to the same controlled member is or are in a pressure transmission position with the three insulating pockets (182 to 184, 185 to 187) in communication with the three connection receiver pockets corresponding to the same controlled member.

22. Means according to claim 21, characterised in that at least one of the two halves (172, 173) of the connector body (171) is in two parts (173a, 173b) which can move independently of each other with respect to the other half (172), each of which having one of the two sets of cavities of the corresponding half (173).

23. Means according to any of claims 1 to 22, of the type in which at least one controlled member (211) is held on its support (213, 210) by means of a universal joint (219, 220, 224, 225) whereby on the one hand the controlled member (221) can be immobilised in a position with respect to its support (213, 210) by the friction against each other of at least two mountings (224, 225) in the form of spherical cups of complementary curvature and having the same centre as the said joint means, which are applied one against the other by an immobilising pressure, and on the other hand the orientation of the controlled member (211) can change with respect to its support (213, 210) under the effect of increasing the volume of at least one of the variable volume chambers (215) of the positioning receivers (214) placed between the said controlled member (211) and its support (213, 210), characterised in that it comprises at least one additional hydraulic circuit including a variable volume chamber release transmitter within the reach of the user and connected by a connection conduit (228a) to at least one variable volume chamber release receiver (228) which is mounted on the support (213, 210) in such a way as to develop an opposing pressure to the immobilising pressure so as to displace one of the said friction mountings (224, 225) from the other by increasing the volume of the said variable volume chamber (228) of the release receiver as a result of a decrease in the volume of the said variable volume chamber of the release transmitter.

24. Means according to claim 23, characterised in that the said variable volume chambers of the said release transmitter and receiver each include at least one flexible wall deformable pocket (228) which is directly mounted within the manually operated control member for the release transmitter, and is held in at least one cavity provided in the corresponding support (210) for the release receiver, the immobilising pressure being exerted elastically (223) on the friction mountings (224, 225).

25. Means according to one of claims 23 and 24, of the the type in which the said universal joint means comprises a half joint (219) which is on the one hand engaged with a hemispherical housing (220) of a plate (212) connected to the controlled member (211) and on the other hand integral with a member (221) providing a connection to the support (213, 210), the said connecting member passing across the base of the housing (220) and being stressed by an elastic member (223) which bears against the support (213) on one side and against the connecting member (221) on the other side so as to exert the said immobilising pressure, characterised in that the said variable volume chamber of the release receiver is a deformable pocket (228) placed in a cavity provided in the support (210) in such a way as to exert an action opposing to that of the said elastic means (223) on the said connecting member (221) when the deformable pocket of the release receiver (228) is enlarged by a decrease in the volume of the variable volume chamber of the release transmitter.

26. Means according to either of claims 23 and 24, of the type in which the said friction mountings in the form of spherical cups (234, 235) of the said universal joint means comprise a convex mounting (234) provided by a plate (232) connected to the controlled member (231) and acting together with a concave mounting (235) enclosing the convex mounting and supported by the base (233) which is integral with the support (230), characterised in that the concave mounting (235) is formed on a peripheral skirt (236) subdivided into contiguous portions by radial slots (237) formed in the skirt (236) which surrounds an annular groove in the base and contains the variable volume chamber of the release receiver which consists of a flexible-wall deformable pocket (238) of substantially torodial shape in such a way that swelling of the said substantially torodial pocket in response to a release command originating from the release transmitter causes radial deplacement of the portions of the skirt (236) with respect to the convex mounting (234) opposing their elastic return, due to the nature of the material constituting the skirt, so as to at least partly release the convex mounting (234) from being immobilised in position by the concave mounting (235) of the skirt and to allow its relative displacement through the effect of the positioning receivers.

27. Means according to either of claims 23 and 24, of the type in which the said friction mountings in the form of spherical cups (248, 247) of the said universal joint means comprise a convex mounting (247) provided by a plate (243) connected to the control member (241) and acting together with a concave mounting which surrounds it and is provided by the support (240), characterised in that the convex mounting (247) is provided on the outer lateral surface of the said plate (243) whose base (244), opposite the controlled member (241), has a hemispherical boss (245) which projects towards the support (240), of radius less than that of the convex mounting (247), forming a concentric half-joint with this convex mounting and engaged in a bowl (246) of the support (240), the said half-joint being held in a position of rotation within the bowl by the compression exerted by the convex mounting (247) via a plurality of fingers (248) each integral with the support (240) and encircling the said convex mounting (247) in such a way as to each define the portion of the discontinuous concave mounting, each finger (248) bounding, in the portion (249) thereof providing a connection with the support (240) and on the side towards the plate (243), a cavity extending in a circumferential direction in which is housed at least one of the inflatable pockets (250) in the shape of one sausage in a string of sausages connected in series by conduits having a small internal volume (251) which form the variable volume chamber of the release receiver in such a way that inflation of the sausages in response to a release order originating from the corresponding-transmitter causes radial displacement of the fingers (248) in opposition to their natural elastic return in order to release the convex mounting (247) and allow rotation of the plate (243) through its half joint (245) on the support (240) through the effect of the positioning receivers.

## Patentansprüche

1. Vorrichtung zur hydraulischen Fernbedienung wenigstens eines an einem Halter (213,210) beweglich angeordneten Teiles (211), wobei die Vorrichtung enthält:
   ein handbetätigtes Steuerorgan und wenigstens zwei, aber vorzugsweise drei hydraulische Positionierkreise, jeder enthaltend
   - einen Positioniergeber (9), der ein fluidischer Druckgeber ist, mit verformbarer Tasche mit nachgiebiger Wand und der ein hydraulisches Fluid enthält,
   - wenigstens einen Positionierempfänger (214), der ein fluidischer Druckempfänger ist, mit volumenveränderbarer Kammer (215),
- und wenigstens eine Verbindungsleitung (9a,216) vom Geber zum Empfänger und so beschaffen, daß die Tasche mit nachgiebiger Wand (9) des Gebers wenigstens eines hydraulischen Kreises mechanisch verformt wird durch manuelle Betätigung des Steuerorgans, derart, daß Fluid, das sie enthält, zu wenigstens einem der Empfänger (214), die mit ihr verbunden sind, und den Empfängern (214), die das Steuerorgan (211) mit seinem Halter (213,210) mechanisch verbinden, übertragen wird, um die Stellung des Steuerorgans in bezug auf den Halter in Antwort auf die Bedienung des Steuerorgans zu verändern, dadurch gekennzeichnet, daß die Tasche (9) mit nachgiebiger Wand jedes Gebers direkt in dem handbetätigten Steuerorgan montiert ist.

2. Vorrichtung nach Anspruch 1, dadurch gekennzeichnet,
daß das handbetätigte Steuerorgan ein knopfmanipulator für direkten Kontakt ist, der eine starre Umhüllung (1,2,4) umfaßt, die einen inneren Sitz für jede der Taschen (9) mit nachgiebiger Wand und zum anderen wenigstens eine Öffnung (8) direkt gegenüber wenigstens einem Bereich der nachgiebigen Wand jeder verformbaren Tasche (9) umgrenzt, um die Verformung jeder Tasche (9) durch Druck des Benutzers auf ihre nachgiebige Wand zu erlauben.

3. Vorrichtung nach Anspruch 2, dadurch gekennzeichnet,
daß die starre Umhüllung ein im wesentlichen zylindrisches Gehäuse (1) umfaßt, das wenigstens teilweise auf einer Seite durch einen Deckel (2) geschlossen ist und wenigstens teilweise einen inneren Körper (3) umgibt, der mit dem Gehäuse (1) und/oder dem Deckel (2) wenigstens zwei, aber vorzugsweise drei Zellen umgrenzt, die vorzugsweise gleichmäßig auf dem inneren Umfang verteilt angeordnet sind, und deren jede eine der Taschen (9) mit nachgiebiger Wand beherbergt, derart, daß sie andere Taschen isoliert und daß die Hilfsöffnungen (8) bei den Taschen (9) in dem Gehäuse (1) und/oder in dem Deckel (2) angeordnet sind.

4. Vorrichtung nach Anspruch 3, dadurch gekennzeichnet,

daß das Gehäuse (1) auf der dem Deckel (2) gegenüberliegenden Seite durch einen Boden (4) geschlossen ist, der mit Durchgangslöchern der Verbindungsleitungseinrichtung (9a) zu den verformbaren Taschen (9) durchbohrt ist und der den inneren Körper (3) trägt, der vorstehende und in der Anzahl den Taschen (9) gleichende Arme (7) aufweist, und daß die Arme die Beherbungszellen der Taschen (9) paarweise umgrenzen, die so durch die Arme (7) des inneren Körpers (3) gegenseitig isoliert sind.

5. Vorrichtung nach Anspruch 4, dadurch gekennzeichnet,
daß der interne Körper (43), der Deckel (42) ohne Öffnung und das Gehäuse (41), dessen Seitenfläche alle Hilfsöffnungen (48) bei den verformbaren Taschen (49) aufweist, als ein einziges Bauteil gegenüber einem Halter (46) zwischen zwei Endstellungen beweglich montiert sind, deren eine eine eingezogene Stellung ist, in welcher das Gehäuse (41) durch einen Verriegelungsmechanismus (46b) an dem Halter (46) blockiert ist, derart, daß nur der Deckel (42) nach außerhalb des Halters (46) vorsteht, und deren andere eine Bedienungsstellung ist, in welcher das Gehäuse (41) wenigstens teilweise nach außerhalb des Halters (46) vorsteht, derart, daß die Hilfsöffnungen (48) bei den Taschen (49) für den Benutzer frei zugänglich sind.

6. Vorrichtung nach Anspruch 2, bestimmt zur Steuerung eines Sicherheitsorgans, dadurch gekennzeichnet,
daß die starre Umhüllung (31) die Form einer Kuvette mit geschlossenem Boden aufweist, in welcher die verformbaren Taschen (39) gehalten sind und um einen zentralen Stab (33,35) herum sitzen, der an der Kuvette befestigt ist und der mit einer Befestigungsplatte (34) des Manipulators an einem Halter (36) verbunden ist, und daß die Platte (34) gesperrt ist und gegenüber wenigstens einer Öffnung der Kuvette einen Zugang zu den verformbaren Taschen (39) anbietet, die an die Verbindungsleitung (38) angeschlossen sind, die durch den zentralen Stab (33,35) hindurchverläuft.

7. Vorrichtung nach Anspruch 1, dadurch gekennzeichnet,
daß das handbetätigte Steuerorgan ein linearer Manipulator ist, der mehrere Drucktasteneinrichtungen (50) enthält, die nebeneinander angeordnet sind und jede eine Taste (51) umfassen, die drehbar um eine Wippachse (56) an einer Befestitungsplatte (57) der Drucktasteneinrichtung (50) eines Halters montiert sind, und daß wenigstens eine verformbare Tasche (59) zwischen jeder verschwenkbaren Taste (51) und der Platte (57) angeordnet ist.

8. Vorrichtung nach Anspruch 7, dadurch gekennzeichnet, daß der lineare Manipulator wenigstens drei nebeneinander befindliche Drucktasteneinrichtungen (50) umfaßt, deren Tasten (51) in Nähe des einen ihrer Enden (55) und auf derselben Seite des Manipulators um eine gemeinsame Wippachse (56) schwenken, die von einer gemeinsamen Platte (57) getragen wird, die mit Durchgangslöchern für die Verbindungsleitungseinrichtung (59a) durchbohrt ist, deren jede an eine verformbare Tasche (59) angeschlossen ist, die zwischen jeder Taste (51) und der gemeinsamen Platte (57) angeordnet ist.

9. Vorrichtung nach Anspruch 7, dadurch gekennzeichnet, daß der lineare Manipulator wenigstens zwei nebeneinander befindliche Drucktasteneinrichtungen (60) umfaßt, deren jede Drucktaste (61) in ihrem Mittelteil um eine gemeinsame und von einem gemeinsamen Basisteil getragene Wippachse (66) verschwenkt, wobei das Basisteil gegenüber jeder Drucktaste (61) mit zwei durchgangslöchern für die Verbindungsleitungseinrichtung durchbohrt ist, die mit den beiden verformbaren Taschen (69) verbunden sind, die zwischen jeder Drucktaste (61) und des gemeinsamen Basisteils (67) und beiderseits der Wippachse (66) angeordnet sind.

10. Vorrichtung nach Anspruch 1, dadurch gekennzeichnet, daß das handbetätigte Steuerorgan ein oszillierender Manipulator ist, der einen Rohrteil (73) zur Befestigung des Manipulators an einem Halter (76) und eine oszillierende Drucktaste (71) enthält, die gelenkig in dem Rohrteil (73) geführt ist und in diesem letzteren an einem Teil angreift, das einen Verformungsnocken (72) für wenigstens drei verformbare Taschen (79) bildet, die vorzugsweise im Innern des Rohrteiles (73) regelmäßig verteilt angeordnet sind, und daß die oszillierende Drucktaste (71) ebenfalls eine Druckplatte (77) außerhalb des Rohrteiles (73) umfaßt, die durch jeden exzentrischen Druck auf sie eine Relativverstellung zwischen dem Rohrteil (73) und der Drucktaste (71) hervorruft und dadurch wenigstens eine verformbare Tasche (79) zusammendrückt.

11. Vorrichtung nach Anspruch 10, dadurch gekennzeichnet, daß der den Nocken bildende Teil der Drucktaste (71) ein radförmiger Kopf (72) auf einem Boden (74,75) des Rohrteiles (73) und an der Druckplatte (77) durch einen dünner werdenden Teil (78) befestigt ist, wodurch mit dem Rohrteil (73) wenigstens eine Sitzaussparung für die Taschen (79) umgrenzt wird, die um den Kopf (72) verteilt angeordnet sind.

12. Vorrichtung nach Anspruch 11, dadurch gekennzeichnet, daß der Kopf (72) der oszillierenden Drucktaste (71) äußerlich als Nocken mit wenigstens drei Kompressionslappen (72a) für die verformbaren Taschen (79) ausgebildet ist.

13. Vorrichtung nach Anspruch 10, dadurch gekennzeichnet, daß der den Nocken bildende Teil der Drucktaste (81) ein Mantelteil (82) ist, dessen Außenseite wenigstens teilweise als konvexe sphärische Kalotte ausgebildet ist, die kugelgelenkartig in einer konkaven sphärischen Kalottenstützfläche im Innern des Rohrteiles (83) montiert ist, und daß die Innenseite des Mantelteils (82) zusammen mit einem Kontaktteil (85), das in den Mantelteil (82) hineinragt und mit dem Rohrteil (83) fest verbunden ist, wenigstens eine Sitzaussparung für die verformbaren Taschen (89) umgrenzt, die um das Kontaktteil (85) innerhalb des Mantelteils (82) herum angeordnet sind.

14. Vorrichtung nach Anspruch 1, dadurch gekennzeichnet, daß das handbetätigte Steuerorgan ein Drucktastenmanipulator (97) ist, der schwimmend an einem Basisteil (91) zur Befestigung des Manipulators an einem Halter gelagert ist und wenigstens drei Eindrücksitze für die verformbaren Taschen (94,95,93) aufweist, gegenüber welchen die Drucktaste (97) Nocken (100,101,102) zum Zusammendrücken der Taschen durch Anlage an der Drucktaste aufweist.

15. Vorrichtung nach Anspruch 14, dadurch gekennzeichnet, daß sich wenigstens zwei Taschen (94,95) in gerader Richtung zu einem Nocken (102) der Drucktaste (97) teilweise (94a,95a) überlappen, dessen Näherungsweg gegenüber den Taschen bei Verstellung der Drucktaste (97) in Richtung auf das Basisteil (91) geringer ist als der Näherungsweg der Nocken (100,101) gegenüber den nicht überlappten Bereichen der beiden Taschen (94,95), die sich teilweise überlappen.

**16.** Vorrichtung nach Anspruch 15, dadurch gekennzeichnet,
daß das Basisteil eine zusätzliche und zentrale Vertiefung aufweist, die eine zusätzliche und zentrale verformbare Tasche (112) beherbergt, um die herum weitere verformbare Taschen (113,114,115) angeordnet sind und mit welchen die zentrale Tasche (112) keine Überlappung aufweist, daß die Drucktaste (117) gegenüber der zentralen und sphärisch geformten Tasche (112) einen zentralen Nocken (118) aufweist, um das gleichzeitige Zusammendrukken der zentralen Tasche (112) und wenigstens einer anderen Tasche (113,114,115) zu erlauben, daß der Näherungsweg des zentralen Nockens (118) auf die zentrale Tasche (112) zu geringer ist als der Näherungsweg der verschiedenen Nocken der Drucktaste (117) und daß der Gesamtweg des zentralen Nockens (118) so ist, daß, wenn er zurückgelegt ist und wenigstens zwei Taschen (114,115) eine Überlappungszone bilden, ein gegenüber der Überlappungszone befindlicher Nocken (122) mit den überlappten Bereichen der beiden Taschen (114,115) in einer Ebene liegt.

**17.** Vorrichtung nach wenigstens einem der Ansprüche 1 - 16, dadurch gekennzeichnet,
daß das handbetätigte Steuerorgan ein Wegumschaltmanipulator (148) ist, der die wahlweise Umsteuerung des einen oder des anderen der beiden Steuerorgane erlaubt, deren Position durch wenigstens zwei, aber vorzugsweise drei fluiddruckbetriebene Positionierempfänger mit verformbaren Empfängertaschen (130,131,132;133,134,135) bestimmt wird, daß der Manipulator einerseits einen Körper (149), der eine Anzahl entsprechender fluiddruckbetriebener Positionier-geber mit verformbaren Gebertaschen (145,146,147) beherbergt, die je mittels Verbindungsleitungen (142,143,144) parallel an zwei Positionierempfänger angeschlossen sind, die je dem einen der beiden Steuerorgane zugeordnet sind, und andererseits zwei fluiddruckbetriebene Sperrgeber mit verformbaren Sperrgebertaschen (153,154) umfaßt, die je mittels einer Verbindungsleitung (155,156) an einen fluiddruckbetriebenen Sperrempfänger mit verformbarer Empfangstasche (157,158) angeschlossen ist, der durch mechanische Mittel in Druckübertragungsgestaltung mit jeder der verformbaren Isoliertaschen (136,137,138;139,141,142), deren Anzahl gleich der Anzahl der Positionierempfängertaschen ist, festgehalten ist, und deren jede zuströmwärts zu einer der genannten verformbaren Positionierempfängertaschen (130,131,132 und 133,134,135) gelegen ist, die dem einen der Steuerorgane derart zugeordnet ist, daß die Kompression einer Sperrgebertasche (153,154) Fluid zur Sperrempfangstasche (157,158) überträgt, die mit ihr verbunden ist und die unter Druck gesetzt wird und das Volumen derart vergrößert, um die Isoliertaschen (136-138;139-141) vor den Positionierempfängertaschen (130,-132 und 133-135) des entsprechenden Steuerorgans gleichzeitig zusammenzudrücken, um die Kommunizierung zwischen diesen Positionierempfängertaschen und den Positioniergebertaschen (145,146,147) des Manipulators (148) zu unterbrechen, der mit den Positionierempfängertaschen in Kommunizierung verbleibt, die dem anderen Steuerorgan zugeordnet sind.

**18.** Vorrichtung nach Anspruch 17, dadurch gekennzeichnet,
daß der Körper des Manipulators (148) mit einem Basisteil (152) aus einem Stück besteht, daß das Basisteil an einem Halter um eine Schwenkachse (0-0') beidseits verschwenkbar montiert ist und zwei Vertiefungen aufweist, deren jede wenigstens teilweise eine der beiden Sperrgebertaschen (153,154) beherbergt, die an dem Halter derart festgehalten sind, daß jede Verschwenkung des Manipulators (148) an dem Halter von einer oder der anderen Seite der Achse (0-0') eine Kompression der einen der Sperrgebertaschen hervorruft.

**19.** Vorrichtung nach einem der Ansprüche 1 bis 18, dadurch gekennzeichnet, in welcher jeder der hydraulischen Kreise wenigstens einen demontierbaren Verbinder enthält, umfassend eine deformierbare Verbindungsempfängertasche (169), die mittels einer Verbindungsleitung (169a) an die verformbare Tasche des entsprechenden Gebers angeschlossen ist, eine verformbare Verbindungsgebertasche (170), die mittels einer Verbindungsleitung (170a) an die verformbare Tasche des entsprechenden Empfängers angeschlossen ist, und eine Umhüllung (161,162), die die Verbindungsgeber- und die empfängertaschen darin gegeneinander anliegend beherbergt, um den auf die Verbindungsempfängertasche (169) ausgeübten Druck auf die Verbindungsgebertasche (170) zu übertragen, dadurch gekennzeichnet,
daß die demontierbaren Verbinderumhüllungen durch einen einteiligen Verbindungskörper (160) mit zwei Klappen (161,162) gebildet sind, die aneinander klappbar und miteinander lösbar fixierbar sind und deren jede eine gleiche Anzahl von wenigstens drei Vertiefungen aufweist, wobei die Vertiefungen der einen Klappe in Gegenüberlage zu den Vertiefungen der anderen Klappe kommen, und daß die drei Verbindungsgebertaschen je in einer der drei Vertiefungen einer Klappe angeordnet sind, die in Gegenüberlage zu den drei Vertiefungen der anderen Klappe (162) kommen, in welchen je eine der drei Verbindungsempfängertaschen (169) angeordnet sind.

20. Vorrichtung nach Anspruch 19, dadurch gekennzeichnet,
daß der Verbinderkörper (160) in einem Stück aus Kunststoffmaterial gegossen ist und daß seine beiden Klappen mit den Vertiefungen (161,162) durch wenigstens ein biegsames Scharnier (163) miteinander verbunden und durch eine lösbare elastische Rastverbindung (168) aneinander fixierbar sind.

21. Vorrichtung nach Anspruch 19 oder 20, enthaltend einen Wegumschaltmanipulator (148) nach Anspruch 17 oder 18, dadurch gekennzeichnet, dass eine der beiden Klappen (172,173) des Verbinderkörpers (171) zwei Vertiefungsgruppen aufweist, wobei jede Gruppe enthält:
  - wenigstens drei Vertiefungen, in welchen drei Verbindungsempfängertaschen (176,177,178;179,180,181) für die Übertragung des gesamten Steuerdruckes auf eines der beiden Steuerorgane beherbergt sind, und
  - wenigstens drei Vertiefungen, in welchen drei verformbare Isoliertaschen (182,183,184;185,186,187) beherbergt sind, wobei jede jeweils mit einer der drei Verbindungsempfängertaschen der entsprechenden Gruppe kommuniziert,
daß die Verbindungsempfängertaschen (176 bis 181) der beiden Gruppen zu drei unabhängigen Paaren (176-181,177-180,178-179) gekoppelt sind, deren jedes eine Verbindungsempfängertasche einer Gruppe mit einer Verbindungsempfängertasche der anderen Gruppe vermittels ihrer Isoliertaschen (182 bis 187) in Kommunizierung hält, die miteinander durch eine Koppelleitung (188,190,192) verbunden sind, in welche eine Verbindungsleitung (189,191,193) zu einer der drei Verbindungsgebertaschen (145,146,147) des Wegumschaltmanipulators (148) einmündet.
und daß die andere Klappe (173) des Verbindungskörpers ebenfalls zwei Vertiefungsgruppen aufweist, wobei jede Gruppe enthält:
  - wenigstens drei Vertiefungen, in welchen drei Verbindungsgebertaschen (194,195,196 und 197,198,199) für die Übertragrung des gesamten Steuerdrukkes auf eines der beiden Steuerorgane beherbergt sind und deren jede durch eine Verbindungsleitung (194a bis 199a) mit der entsprechenden der drei Positionierempfängertaschen (130,131,132 und 133,134,135) des entsprechenden Steuerorganes verbunden ist, und
  - wenigstens eine Vertiefung, in welcher wenigstens eine verformbare Sperrempfängertasche (200,201,202;203,204,205) beherbergt ist, die durch eine Übertragungsleitung (206,207) mit einer der beiden Sperrgebertaschen (153,154) des Wegumschaltmanipulators (148) verbunden ist, derart, daß
wenn die beiden Klappen (172,173) aneinander geklappt und miteinander fixiert sind, jede der drei Verbindungsempfängertaschen (176,177,178;179,180,181), die einem Steuerorgan entspricht, in Druckübertragungsposition mit der jeweiligen Tasche der drei Verbindungsgebertaschen (194,195,196;197,198,199) ist, die demselben Steuerorgan entspricht, und daß die Sperrempfängertasche(n) (200,201,202;203,204,205), die den drei Verbindungsgebertaschen, die diesem selben Steuerorgan entsprechen, zugeordnet ist/sind, in Druckübertragungsposition mit den drei Isoliertaschen (182,183,184;185,186,187), ist/sind, die mit den drei Verbindungsempfängertaschen kommunizieren, die demselben Steuerorgan entsprechen.

22. Vorrichtung nach Anspruch 21, dadurch gekennzeichnet,
daß wenigstens eine der beiden Klappen (172,173) des Verbinderkörpers (171) aus zwei in bezug auf die andere Klappe (172) voneinander unabhängig lösbaren Bauteilen (173a,173b) besteht und daß jedes Bauteil eine der beiden Vertiefungsgruppen der entsprechenden Klappe (173) aufweist.

23. Vorrichtung nach einem der Ansprüche 1 bis 22 des Typs, bei dem wenigstens ein Steuerorgan (211) an seinem Halter (213,210) durch Kugelgelenkmittel (219,220,224,225) gehalten ist, die einerseits die Blockage des Steuerorgans (221) in der Position in bezug auf seinen Halter (213,210) durch gegenseitige Reibung von zwei Flächen (224,225) in Form sphärischer Kalotten mit komplementären Krümmungen und demselben Zentrum der Kugelgelenkmittel, wobei die Flächen durch einen Blockagedruck gegeneinander gedrückt werden, und die andererseits die Richtungsänderung des Steuerorgans (211) in bezug auf seinen Halter (213,210) unter der Wirkung der Volumenvergroßerung von wenigstens einer Kammer (215) mit variablen Volumen der Positionierempfänger (214), die zwischen dem Steuerorgan (211) und seinem Halter (213,210) angeordnet sind, erlauben, dadurch gekennzeichnet, daß sie wenigstens einen komplementären Hydraulikkreis umfaßt, der einen Deblockagegeber mit volumenveränderbarer Kammer und mit Benutzerfläche aufweist und durch eine Verbindungsleitung (228a) mit wenigstens einem Deblockageempfänger mit volumenveränderbarer Kammer (228) verbunden ist, die an dem Halter (213,210) derart befestigt ist, daß ein Gegendruck auf den Blockagedruck entwickelt wird, um die genannten Reibflächen (224,225) durch Volumenvergrößerung der volumenveränderbaren Kammer (228) des Deblockageempfängers voneinander zu entfernen infolge der Volumenverringerung der volumenveränderbaren Kammer des Deblockagegebers.

24. Vorrichtung nach Anspruch 23, dadurch gekennzeichnet, daß die genannten volumenveränderbaren Kammern der genannten Deblockagegeber und -empfänger je umfassen wenigstens eine verformbare Tasche (228) mit nachgiebiger Wand, die direkt in dem handbetätigten Steuerorgan für den Deblockagegeber montiert ist, und die in wenigstens einer Vertiefung gehalten ist, die in dem entsprechenden Halter (210) für den Deblockageempfänger ausgebildet ist, und daß der Blockagedruck elastisch (223) auf die Reibflächen (224,225) ausgeübt wird.

25. Vorrichtung nach Anspruch 23 oder 24 des Typs, bei dem die genannten Kugelgelenkmittel ein Halbkugelgelenk (219) umfassen, das einerseits in einem halbkugelförmigen Sitz (220) einer Platine (212), die mit dem Steuerorgan (211) verbunden ist, angreift und andererseits an einem Verbindungsteil (221) an dem Halter (213,210) befestigt ist, wobei das Verbindungsteil den Boden des Sitzes (220) durchquert und von einem elastischen Teil (223) beaufschlagt wird, das auf einer Seite des Halters (213) und zum anderen an dem Verbindungsteil (221) anliegt, dadurch gekennzeichnet, daß die genannte volumenveränderbare Kammer des Deblockageempfängers eine verformbare Tasche (228) ist, die in einer Vertiefung angeordnet ist, die in dem Halter (210) ausgeführt ist, derart, daß eine Gegenkraft zu derjenigen des genannten elastischen Mittels (223) ausgeübt wird, wenn die verformbare Tasche des Deblockageempfängers (228) durch eine Volumenverringerung der volumenveränderbaren Kammer des Deblockagegebers vergrößert wird.

26. Vorrichtung nach Anspruch 23 oder 24 des Typs, bei dem die genannten Reibflächen in Form von sphärischen Kalotten (234,235) der genannten Kugelgelenkmittel eine konvexe Stützfläche (234) umfassen, die an einer mit dem Steuerorgan (231) verbundenen Platine (232) vorgesehen ist und mit einer konkaven Stützfläche (235) zusammenarbeitet, die die konvexe Stützfläche umgibt und sich an einem an dem Halter (230) befestigten Basisteil (233) abstützt, dadurch gekennzeichnet, daß die konkave Stützfläche (235) an einem Umfangsmantel (236) ausgebildet ist, der in Platten unterteilt ist, die an radiale Spalte (237) angrenzen, die in dem Mantel ausgeführt sind, der eine Ringrille des Basisteils umgibt und die volumenveränderbare Kammer des Deblockageempfängers enthält, die aus einer verformbaren Tasche (238) mit nachgiebiger Wand und im wesentlichen torischer Form gebildet ist, derart, daß das Auffüllen der im wesentlichen torischen Tasche, in Antwort auf einen vom Deblockagegeber herstammenden Befehl, die radiale Wegbewegung der Platten des Mantels (236) in bezug auf die konvexe Stützfläche (234) und gegen ihre elastische Rückstellung begründet durch das wesentliche Material des Mantels, steuert.

27. Vorrichtung nach Anspruch 23 oder 24 des Typs, bei dem die genannten Reibflächen in Form sphärischer Kalotten (248,247) der genannten Kugelgelenkmittel eine konvexe Stützfläche (247) umfassen, die auf einer Platine (243) vorgesehen ist, die mit dem Steuerorgan (241) verbunden ist und mit einer konkaven Stützfläche zusammenarbeitet, die sie umgibt und die an dem Halter (240) vorgesehen ist, dadurch gekennzeichnet, daß die konvexe Stützfläche (247) an der äußeren Seitenfläche der genannten Platine (243) angebracht ist, deren Boden (244) auf der dem Steuerorgan entgegengesetzten Seite einen zum Halter (246) vorstehenden halbkugelförmigen Buckel (245) mit kleinerem Radius als dem der konvexen Stützfläche (247) aufweist und ein Halbkugelgelenk bildet, das konzentrisch zu dieser konvexen Stützfläche ist und in einer Schale (246) des Halters (240) liegt, daß das Halbkugelgelenk durch den Druck in Drehstellung in der Schale gehalten wird, der auf die konvexe Stützfläche (247) durch eine Mehrzahl von Fingern (248) ausgeübt wird, die je an dem Halter (240) befestigt sind und die konvexe Stützfläche (247) derart umgeben, daß jeder einen Teil der konkaven Stützfläche definiert, die diskontinuierlich ist, und daß jeder Finger (248) auf dem Niveau seines Verbindungsteils mit dem Halter (240) und auf der der Platine (243) zugekehrten Seite einen Freiraum begrenzt, der sich in Umfangsrichtung erstreckt und in welchem wenigstens einer der auffüllbaren Taschen (250) in Form eines Kranzes nach Art einer Behälterkette beherbergt ist und der die volumenveränderbare Kammer des Deblockageempfängers bildet, derart, daß die Auffüllung der Behälterkette in Antwort auf einen vom entsprechenden Geber stammenden Deblockagebefehl eine radiale Wegbewegung der Finger (248) gegen ihre natürliche Rückstellung hervorruft, um die konvexe Stützfläche (247) zu befreien und um eine Drehung der Platine (243) um ihr Halbkugelgelenk (245) an dem Halter (240) unter der Aktion der Positionierempfänger zu ermöglichen.

EP 0 266 242 B1

FIG.1a

FIG.1b

FIG.2a

FIG.2b

FIG.3a

FIG.3b

FIG.4a

FIG.4b

EP 0 266 242 B1

FIG.5b

FIG.5a

FIG.5c

FIG.6b

FIG.6a

40

FIG.7b

FIG 7a

FIG.8a    a-a

FIG.8b

FIG.9

FIG.10a

FIG.10b

FIG.10c

FIG.10d

FIG.10e

FIG.11a

FIG.11b

FIG.13

FIG.14

FIG.12

FIG.15

FIG.16a

FIG.16b

237

236

237

238

233

238a

FIG.17b

230

232

231

d

236

235

234

233

d

FIG.17a

FIG.18a

FIG.18b

FIG.18c